# EUROPÄISCHE PATENTANMELDUNG

(11) **EP 4 108 697 A1**
(43) Veröffentlichungstag der Anmeldung: **28.12.2022**
(21) Anmeldenummer: 21180672.4
(22) Anmeldetag: 21.06.2021
(51) Int. Cl.: C08G 18/62, C08G 18/80, C09D 175/04

(54) **BESCHICHTUNGSMITTEL UND DARAUS ERHÄLTLICHE BESCHICHTUNGEN MIT VERBESSERTEN ANSCHMUTZUNGSRESISTENZEN UND (SELBST-)REINIGUNGSEIGENSCHAFTEN**

(71) Anmelder: Covestro Deutschland AG, 51373 Leverkusen (DE)
(72) Erfinder: REIMANN, Yvonne, 50226 Frechen (DE); HEBESTREIT, Tanja, 51688 Wipperfürth (DE); WEIKARD, Jan, 51375 Leverkusen (DE); LAAS, Hans-Josef, 51519 Odenthal (DE)
(74) Vertreter: Levpat

(57) **Zusammenfassung**

Die Erfindung betrifft nichtwässrige Beschichtungsmittel, enthaltend mindestens ein Thioallophanat mit freien oder blockierten Isocyanatgruppen und mit Silangruppen, mindestens eine isocyanatreaktive Verbindung, mindestens einen Katalysator für die Vernetzung der Silangruppen und mindestens ein alkoxysilylfunktionelles und/oder Hydroxylgruppen-enthaltendes Siloxan, die Verwendung dieser Beschichtungsmittel zur Herstellung von Beschichtungen und Lackierungen, insbesondere für die Verwendung im Bereich des Transportwesens, d.h. bei Fahrzeugen, insbesondere bei Schiffen, Flugzeugen, Kraftfahrzeugen wie Autos, Lastkraftwagen, Bussen, Großfahrzeugen, Bahnfahrzeugen u.s.w.. Insbesondere eignen sich die Beschichtungsmittel zur Herstellung von Klarlacken.

## Beschreibung

Die Erfindung betrifft nichtwässrige Beschichtungsmittel, enthaltend mindestens ein Thioallophanat mit freien oder blockierten Isocyanatgruppen und mit Silangruppen, mindestens eine isocyanatreaktive Verbindung, mindestens einen Katalysator für die Vernetzung der Silangruppen und mindestens ein alkoxysilylfunktionelles und/oder Hydroxylgruppen-enthaltendes Siloxan, die Verwendung dieser Beschichtungsmittel zur Herstellung von Beschichtungen und Lackierungen, insbesondere für die Verwendung im Bereich des Transportwesens, d.h. bei Fahrzeugen, insbesondere bei Schiffen, Flugzeugen, Kraftfahrzeugen wie Autos, Lastkraftwagen, Bussen, Großfahrzeugen, Bahnfahrzeugen u.s.w.. Insbesondere eignen sich die Beschichtungsmittel zur Herstellung von Klarlacken.

Im Bereich der Automobilserienlackierung hat sich über die letzten 3 Jahrzehnte die Verwendung von Zweikomponenten-Polyurethan(2K-PUR)-Klarlacken etabliert. Aus der WO2017/042177 sind 2K-PUR-Lacke auf Basis von Silangruppen-enthaltenden Thioallophanten als Vernetzungsmittel bekannt, die zu hoch kratzfesten Lacken aushärten und im Besonderen im Bereich der Automobillackierung, bevorzugt als Klarlacke, Verwendung finden.

Aufgabe der vorliegenden Erfindung war es, neue Beschichtungsmittel zur Verfügung zu stellen, die zu hoch kratzfesten und Lösemittelbeständigen Beschichtungen aushärten, wobei diese Beschichtungen sich zudem durch sehr gute Anschmutzungsresistenzen und (Selbst)reinigungseigenschaften auszeichnen sollten. Darüber hinaus sollten die Beschichtungsmittel die üblicherweise an die Klarlackschicht bei Lackierungen im Bereich des Transportwesens, wie Automobilserienlackierungen und Autoreparaturlackierungen, gestellten Anforderungen erfüllen.

Diese Aufgabe konnte mit der Bereitstellung der nachfolgend näher beschriebenen erfindungsgemäßen Beschichtungsmittel, welche neben mindestens einem Silangruppen enthaltenden, NCOfunktionellen Thioallophanat mindestens ein spezielles alkoxysilylfunktionelles und/oder ein spezielles Hydroxylgruppen-enthaltendes Siloxan enthalten, gelöst werden.

Aus der WO2017/202692 sind Beschichtungsmittel und daraus erhältliche Beschichtungen mit verbesserten Anschmutzungsresistenzen und (Selbst)reinigungseigenschaften bekannt, die unter Verwendung von Aminosilan-funktionalisierten Isocyanaten in Kombination mit alkoxysilylfunktionellen Siloxanen erhältlich sind. Die Verwendung von Silangruppen und Isocyanatgruppen-enthaltenden Thioallophanaten in Kombination mit alkoxysilylfunktionellen und/oder Hydroxylgruppen-enthaltenden Siloxanen wird nicht erwähnt oder nahegelegt.

Gegenstand der vorliegenden Erfindung sind nichtwässrige Beschichtungsmittel, enthaltend oder bestehend aus
A) mindestens eine/r Polyisocyanatkomponente (A), die mindestens ein Silangruppen enthaltendes Thioallophanat der allgemeinen Formel (I) 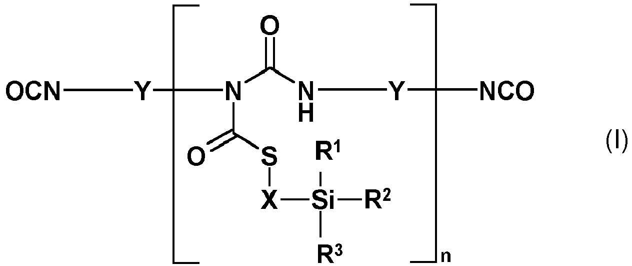 enthält, in welcher
   - R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
   - X: für einen linearen oder verzweigten organischen Rest mit mindestens 2 Kohlenstoffatomen steht,
   - Y: einen linearen oder verzweigten, aliphatischen oder cycloaliphatischen, einen araliphatischen oder aromatischen Rest mit bis zu 18 Kohlenstoffatomen bedeutet und
   - n: für eine ganze Zahl von 1 bis 20 steht,
B) mindestens eine/r isocyanatreaktive/n Verbindung (B), ausgenommen Verbindungen der Komponente Cii),
C)
   i) mindestens ein/em alkoxysilylfunktionelles/en Siloxan (Ci) der Formel (II)

      R⁴-SiR⁵₂-Aₓ-B_{y}-O-SiR⁶₂-R⁷ (II),

      worin A eine Gruppe -[O-SiR⁸₂]- und B eine Gruppe -[O-SiR⁹R¹⁰]- ist,
      R⁵, R⁶, R⁸ und R⁹ unabhängig voneinander lineare oder verzweigte Alkylgruppen mit 1 bis 4 Kohlenstoffatomen sind,
      R⁴, R⁷ und R¹⁰ unabhängig voneinander eine Gruppe -L-R¹¹ sind, worin
      L = eine lineare oder verzweigte 2-bindige Alkylgruppe und
      R¹¹ = H oder -Si(R¹²)_{z}(OR¹³)_{3-z}mit R¹², R¹³ = eine lineare oder verzweigte Alkylgruppe mit 1 bis 4 Kohlenstoffatomen und z = 0, 1, oder 2, bevorzugt z = 0, ist,
      mit der Vorgabe, das mindestens einer der Reste R⁴ oder R⁷ und/oder mindestens eine Gruppe B eine Gruppe R¹¹ = -Si(R¹²)_{z}(OR¹³)_{3-z} beinhaltet,
      x unabhängig für eine ganze Zahl von 1 -20 steht, und
      y unabhängig für eine ganze Zahl von 0-10 steht,
      wobei bevorzugt x+y ≤ 20 ist,
      und/oder
   ii) mindestens ein/em Hydroxylgruppen-haltiges/en Siloxan (Cii) der Formel (III)

      R¹⁴-SiR¹⁵₂-(O-SiR¹⁶₂)_{w}-O-SiR¹⁷₂-R¹⁸ (III),

      worin
      R¹⁵, R¹⁶ und R¹⁷ unabhängig voneinander lineare oder verzweigte Alkylgruppen mit 1 bis 4 Kohlenstoffatomen sind,
      R¹⁴ und R¹⁸ unabhängig voneinander eine Gruppe -L'-R¹⁹ sind, worin
      L' = eine lineare oder verzweigte 2-bindige Alkylgruppe und R¹⁹ = H oder OH ist, mit der Vorgabe, das mindestens einer der Reste R¹⁴ oder R¹⁸ einem Rest -L'-OH entspricht,
      w für eine ganze Zahl von 1 -20 steht,
D) mindestens einen/einem Katalysator zur Vernetzung von Silangruppen (D) und
E) gegebenenfalls weitere/n Hilfs- und Zusatzstoffe/n (E).

Gegenstand der Erfindung ist auch die Verwendung dieser nichtwässrigen Beschichtungsmittel zur Herstellung von Polyurethanlacken, insbesondere zur Verwendung im Bereich des Transportwesens, d.h. zur Lackierung von Fahrzeugen, insbesondere Schiffen, Flugzeugen, Kraftfahrzeugen wie Autos, Lastkraftwagen, Bussen, Großfahrzeugen, Bahnfahrzeugen. Insbesondere handelt es sich bei den Lacken um Klarlacke.

Das erfindungsgemäße Beschichtungsmittel ist nichtwässrig. Dies bedeutet, daß im Rahmen der vorliegenden Erfindung die Beschichtungsmittel organische Lösemittel enthalten oder als wasserfreie Systeme formuliert sind. Jedenfalls enthält das Beschichtungsmittel nur in untergeordneten Mengen Wasser, bevorzugt kein Wasser (wasserfrei). Insbesondere bevorzugt ist weniger als 5 Gew.- % Wasser, bevorzugt weniger als 2,5 Gew.-% Wasser, bezogen auf das Gesamtgewicht des Beschichtungsmittels, enthalten.

### Komponente (A)

Die Polyisocyanatkomponente (A) der erfindungsgemäßen Beschichtungsmittel enthält mindestens ein Silangruppen enthaltendes Thioallophanat der allgemeinen Formel (I) 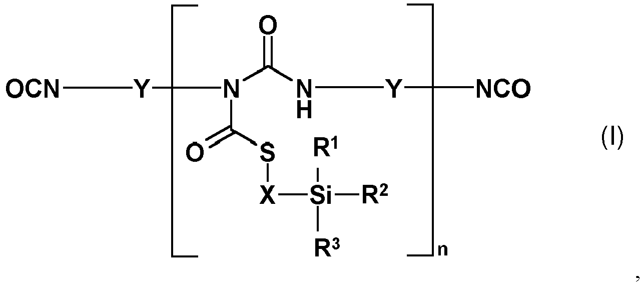 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht,
- Y: einen linearen oder verzweigten, aliphatischen oder cycloaliphatischen, einen araliphatischen oder aromatischen Rest mit bis zu 18 Kohlenstoffatomen bedeutet und
- n: für eine ganze Zahl von 1 bis 20 steht.

In einer bevorzugten Ausführungsform der vorliegenden Erfindung besteht die Polyisocyanatkomponente (A) der erfindungsgemäßen Beschichtungsmittel aus mindestens einem Silangruppen enthaltenden Thioallophanat der allgemeinen Formel (I).

Die Herstellung dieser Silangruppen enthaltender Thioallophanate erfolgt durch Umsetzung
a) mindestens eines monomeren Diisocyanates der allgemeinen Formel (IV)

   OCN-Y-NCO (IV),

   in welcher Y einen linearen oder verzweigten, aliphatischen oder cycloaliphatischen, einen araliphatischen oder aromatischen Rest mit bis zu 18 Kohlenstoffatomen bedeutet, mit
b) Mercaptosilanen der allgemeinen Formel (V) 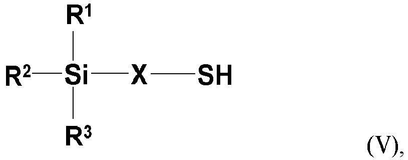 in welcher
   R¹, R², R³ und X die oben genannte Bedeutung haben,
   in einem Äquivalentverhältnis von Isocyanatgruppen zu Mercaptogruppen von 2 : 1 bis 40 : 1.

Als Ausgangsverbindungen a) zur Herstellung der Silangruppen enthaltenden Thioallophanate sind beliebige Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können.

Geeignete Diisocyanate sind beispielsweise solche der allgemeinen Formel (IV)

**OCN-Y-NCO** (IV),

in welcher Y für einen linearen oder verzweigten, aliphatischen oder cycloaliphatischen Rest mit bis zu 18 Kohlenstoffatomen, bevorzugt 4 bis 18 Kohlenstoffatomen oder einen gegebenenfalls substituierten aromatischen oder araliphatischen Rest mit bis zu 18 Kohlenstoffatomen, bevorzugt 5 bis 18 Kohlenstoffatomen steht, wie z. B. 1,4-Diisocyanatobutan, 1,5-Diisocyanatopentan (PDI), 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3-und 1,4-Diisocyanatocyclohexan, 1,4-Diisocyanato-3,3,5-trimethylcyclohexan, 1,3-Diisocyanato-2-methylcyclohexan, 1,3 -Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3-und 1,4-Bis-(isocyanatomethyl)benzol, 1,3-und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Als Ausgangskomponente a) besonders bevorzugt sind Diisocyanate der allgemeinen Formel (IV), in welcher Y für einen linearen oder verzweigten, aliphatischen oder cycloaliphatischen Rest mit 5 bis 13 Kohlenstoffatomen steht.

Ganz besonders bevorzugte Ausgangskomponenten a) für das erfindungsgemäße Verfahren sind 1,5-Diisocyanaotpentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Ausgangskomponenten b) zur Herstellung der Silangruppen enthaltenden Thioallophanate sind beliebige Mercaptosilane der allgemeinen Formel (V) 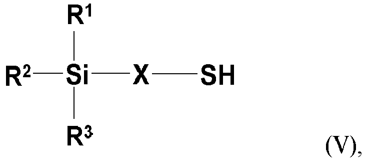 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
- X: für einen linearen oder verzweigten organischen Rest mit mindestens 2 Kohlenstoffatomen steht.

Geeignete Mercaptosilane b) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3 -Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Bevorzugte Mercaptosilane b) zur Herstellung der Silangruppen enthaltenden Thioallophanate sind solche der allgemeinen Formel (V), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- X: für einen linearen oder verzweigten Alkylenrest mit 2 bis 10 Kohlenstoffatomen steht.

Besonders bevorzugte Mercaptosilane b) sind solche der allgemeinen Formel (V), in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht, und
- X: für einen Propylenrest (-CH₂-CH₂-CH₂-) steht.

Ganz besonders bevorzugte Mercaptosilane b) sind solche der allgemeinen Formel (V), in welcher
- R¹, R² und R³: für gleiche oder verschiedene Reste stehen und jeweils Methyl, Methoxy oder Ethoxy bedeuten, mit der Maßgabe, daß mindestens einer der Reste R¹, R² und R³ für einen Methoxy- oder Ethoxyrest steht, und
- X: für einen Propylenrest (-CH₂-CH₂-CH₂-) steht.

Zur Herstellung der Silangruppen enthaltenden Thioallophanate werden die Diisocyanate a) mit den Mercaptosilanen b) bei Temperaturen von 20 bis 200 °C, vorzugsweise 40 bis 160 °C, unter Einhaltung eines Äquivalentverhältnis von Isocyanatgruppen zu Mercaptogruppen von 2 : 1 bis 40 : 1, vorzugsweise von 4 : 1 bis 30 : 1, besonders bevorzugt 6: 1 bis 20 : 1, zu Thioallophanaten umgesetzt.

Die Umsetzung kann unkatalysiert als thermisch induzierte Allophanatisierung durchgeführt werden. Bevorzugt kommen zur Beschleunigung der Allophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiär Amine der in der GB-A0 994 890 beschriebenen Art, um Alkylierungsmittel der in der US-A3 769 318 beschriebenen Art oder um starke Säuren, wie sie in der EP-A0 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylacetoacetat), Eisen-(III)-chlorid, Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren zur Herstellung der Silangruppen enthaltenden Thioallophanate sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A0 649 866 Seite 4, Zeile 7 bis Seite 5, Zeile 15 beschrieben.

Bevorzugte Katalysatoren zur Herstellung der Silangruppen enthaltenden Thioallophanate sind Zink- und/oder Zirconiumverbindungen der obengenannten Art. Ganz besonders bevorzugt ist die Verwendung Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen beim der Herstellung der Silangruppen enthaltenden Thioallophanate, falls überhaupt, in einer Menge von 0,001 bis 5 Gew.-%, vorzugsweise 0,005 bis 1 Gew.-%, bezogen auf das Gesamtgewicht der Reaktionspartner a) und b) zum Einsatz und können sowohl vor Reaktionsbeginn als auch zu jedem Zeitpunkt der Reaktion zugesetzt werden.

Die Herstellung der Silangruppen enthaltenden Thioallophanate wird vorzugsweise lösungsmittelfrei durchgeführt. Gegebenenfalls können aber auch geeignete, gegenüber den reaktiven Gruppen der Ausgangskomponenten inerte Lösungsmittel mitverwendet werden. Geeignete Lösungsmittel sind beispielsweise die an sich bekannten üblichen Lacklösungsmittel, wie z. B. Ethylacetat, Butylacetat, Ethylenglykolmonomethyl- oder -ethyletheracetat, 1-Methoxypropyl-2-acetat (MPA), 3-Methoxyn-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®}, Varsol^{®} (ExxonMobil Chemical Central Europe, Köln, DE) und Shellsol^{®} (Shell Deutschland Oil GmbH, Hamburg, DE) im Handel sind, aber auch Lösungsmittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösungsmittel. Bevorzugt enthalten diese Lösungsmittel oder Lösungsmittelgemische einen Wassergehalt von höchstens 1,0 Gew.-%, besonders bevorzugt höchstens 0,5 Gew.-% bezogen auf eingesetztes Lösungsmittel auf.

In einer möglichen Ausführungsform wird bei der Herstellung der Silangruppen enthaltenden Thioallophanate das Ausgangsdiisocyanat a) bzw. eine Mischung verschiedener Ausgangsdiisocyanate a) gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt. Anschließend wird das Mercaptosilan b) bzw. eine Mischung verschiedener Mercaptosilane in der oben angegebenen Menge zugegeben und die Reaktionstemperatur für die Thiourethanisierung gegebenenfalls durch eine geeignete Maßnahme (Heizen oder Kühlen) auf eine Temperatur von 30 bis 120°C, vorzugsweise von 50 bis 100°C eingestellt. Im Anschluß an die Thiourethanisierungsreaktion, d. h. wenn der einem vollständigen Umsatz von Isocyanat- und Mercaptogruppen theoretisch entsprechende NCO-Gehalt erreicht ist, kann die Thioallophanatisierung beispielsweise ohne Zusatz eines Katalysators durch Erhitzen des Reaktionsgemisches auf eine Temperatur von 120 bis 200°C gestartet werden. Vorzugsweise kommen zur Beschleunigung der Thioallophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 70 bis 120°C, zur durchführung der Reaktion ausreichend sind.

In einer anderen möglichen Ausführungsform des Verfahrens zur Herstellung der Silangruppen enthaltenden Thioallophanate wird der gegebenenfalls mitzuverwendenden Katalysator entweder der Diisocyanatkomponente a) und/oder der Silankomponente b) bereits vor Beginn der eigentlichen Umsetzung zugemischt. In diesem Fall reagieren die sich intermediär bildenden Thiourethangruppen spontan weiter zur gewünschten Thioallophanatstruktur. Bei dieser Art der einstufigen Reaktionsführung werden die gegebenenfalls den Katalysator enthaltenden Ausgangsdiisocyanate a) gegebenenfalls unter Inertgas, wie beispielsweise Stickstoff, und gegebenenfalls in Gegenwart eines geeigneten Lösungsmittels der genannten Art, in der Regel bei für die Thioallophanatisierung optimalen Temperaturen im Bereich von 60 bis 140°C, vorzugsweise 70 bis 120°C, vorgelegt und mit der gegebenenfalls den Katalysator enthaltenden Silankomponente b) zur Reaktion gebracht.

Es ist aber auch möglich, den Katalysator dem Reaktionsgemisch zu einem beliebigen Zeitpunkt während der Thiourethanisierungsreaktion zuzusetzen. Bei dieser Ausführungsform des Verfahrens zur Herstellung der Silangruppen enthaltenden Thioallophanate wird für die vor der Katalysatorzugabe ablaufende reine Thiourethanisierungsreaktion in der Regel eine Temperatur im Bereich von 30 bis 120°C, vorzugsweise von 50 bis 100°C, eingestellt. Nach Zugabe eines geeigneten Katalysators wird die Thioallophantisierungreaktion schließlich bei Temperaturen von 60 bis 140°C, vorzugsweise von 70 bis 120°C, durchgeführt.

Bei der Herstellung der Silangruppen enthaltenden Thioallophanate kann der Verlauf der Umsetzung durch z. B. titrimetrische Bestimmung des NCO-Gehaltes verfolgt werden. Nach Erreichen des angestrebten NCO-Gehaltes, vorzugsweise wenn der Thioallophanatisierungsgrad (d. h. der aus dem NCO-Gehalt errechenbare prozentuale Anteil der zu Thioallophanatgruppen umgesetzten, aus den Mercaptogruppen der Komponente b) sich intermediär bildenden Thiourethangruppen) des Reaktionsgemisches mindestens 70 %, besonders bevorzugt mindestens 90 % beträgt, ganz besonders bevorzugt nach vollständiger Thioallophanatisierung, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Thioallophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Diisocyanaten, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocyanaten, gegebenenfalls mitverwendete Lösungsmittel bei Verzicht auf den Einsatz eines Katalysatorgiftes gegebenenfalls aktiven Katalysator enthalten, können problemlos zur erneuten Oligomerisierung verwendet werden.

In einer weiteren Ausführungsform des Verfahrens zur Herstellung der Silangruppen enthaltenden Thioallophanate werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Aufarbeitung erhält man als Produkte klare, praktisch farblose Thioallophanatpolyisocyanate, die in der Regel Farbzahlen von unter 120 APHA, vorzugsweise von unter 80 APHA, besonders bevorzugt von unter 60 APHA, und einen NCO-Gehalt von 2,0 bis 18,0 Gew.-%, vorzugsweise 7,0 bis 17,0 Gew.-%, besonders bevorzugt 10,0 bis 16,0 Gew.-%, aufweisen. Dabei beträgt die mittlere NCO-Funktionalität in Abhängigkeit vom Umsatzgrad und verwendetem Thioallophanatisierungskatalysator in der Regel von 1,8 bis 3,0, vorzugsweise von 1,8 bis 2,5, besonders bevorzugt von 1,9 bis 2,1,

Neben den Thioallophanatpolyisocyanaten kann die Polyisocyanatkomponente (A) gegebenenfalls noch weitere Polyisocyanate mit aliphatisch, cycloaliphatisch, araliphatisch und/oder aromatisch gebundenen Isocyanatgruppen enthalten, die gegebenenfalls auch bereits Silangruppen aufweisen können. Bei diesen weiteren Polyisocyanaten handelt es sich insbesondere um die bekannten Lackpolyisocyanate mit Uretdion-, Isocyanurat-, Iminooxadiazindion-, Urethan-, Allophanat-, Biuret- und/oder Oxadiazintrionstruktur, wie sie beispielhaft in Laas et al., J. Prakt. Chem. 336, 1994, 185-200*,* der DE-A1 670 666, DE-A3 700 209, DE-A3 900 053, EP-A0 330 966, EP-A0 336 205, EP-A0 339 396 und EP-A 0 798 299 beschrieben sind, sowie um Umsetzungsprodukte solcher Polyisocyanate mit Silangruppen enthaltenden, gegenüber Isocyanatgruppen reaktiven Verbindungen, wie sie z. B. in EP-A1 273 640, WO 2014/086530 oder WO 2009/156148 beschrieben sind.

Bevorzugte weitere Polyisocyanate, die neben den Silangruppen enthaltenden Thioallophanaten gegebenenfalls in der Polyisocyanatkomponente (A) enthalten sein können, sind solche der genannten Art mit ausschließlich aliphatisch und/oder cycloaliphatisch gebundenen Isocyanatgruppen, insbesondere solche auf Basis von PDI, HDI und/oder IPDI.

Falls überhaupt kommen in den erfindungsgemäßen Beschichtungsmitteln diese weiteren Polyisocyanate in der Polyisocyanatkomponente (A) in Mengen von bis zu 70 Gew.-%, vorzugsweise bis zu 60 Gew.-%, besonders bevorzugt bis zu 50 Gew.-%, bezogen auf die Geamtmenge der aus mindestens einem Silangruppen enthaltenden Thioallophanat und gegebenenfalls weiteren Polyisocyanaten bestehenden Polyisocyanatkomponente (A) zum Einsatz.

In den im Falle der Mitverwendung weiterer Polyisocyanate der genannten Art als Polyisocyanatkomponenten (A) vorliegenden Abmischungen übernehmen die Silangruppen enthaltenden Thioallophanatpolyisocyanate aufgrund ihrer sehr niedrigen Viskosität die Rolle eines Reaktivverdünners für die in der Regel höherviskosen Lackpolyisocyanate. Solche Abmischungen von Silangruppen enthaltenden Thioallophanatpolyisocyanaten mit weiteren Polyisocyanaten zeigen gegenüber den bisher bekannten silanfunktionellen Polyisocyanaten des Standes der Technik bei vergleichbaren Silangehalten den Vorteil erheblich höherer Isocyanatgehalte und -funktionalitäten bei gleichzeitig deutlich niedrigeren Viskositäten.

Die freien Isocyanatgruppen der Polyisocyanate der Komponente (A) können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Beispiele für derartige Blockierungsmittel sind in der EP 0 626 888 A1 und EP 0 692 007 A1 beschrieben. Bevorzugt wird als Blockierungsmittel wenigstens eine Verbindung ausgewählt aus der Gruppe bestehend aus Alkoholen, Phenolen, Pyridinolen, Thiophenolen, Chinolinolen, Mercaptopyridinen, Chinolinolen, Amiden, Imiden, Imidazolen, Imidazolinen, Lactamen, Oximen, Pyrazolen, Triazolen, Malonsäureestern, Acetessigsäureestern, Acetylketonen und Cyclopentanon-2-Alkylestern, als Blockierungsmittel verwendet. Stärker bevorzugt erfolgt die Blockierung mit einer Verbindung ausgewählt aus der Gruppe bestehend aus Mercaptopyridinen, Chinolinolen, Amiden, Imiden, Imidazolen, Imidazolinen, Lactamen, Oximen, Pyrazolen, Triazolen, Malonsäureestern, Acetessigsäureestern, Acetylketonen und Cyclopentanon-2-Alkylestern.

### Komponente (B)

Die erfindungsgemäßen Beschichtungsmittel enthalten mindestens eine isocyanatreaktive Verbindung (B). Eine "isocyanatreaktive Verbindung" ist eine Verbindung, die wenigstens eine gegenüber Isocyanaten reaktive Gruppe trägt. Grundsätzlich sind ein- oder mehrwertige Alkohole, Aminoalkohole, Amine und Thiole als isocyanatreaktive Verbindung B geeignet. Vorzugsweise weisen die vorgenannten Verbindungen pro Molekül eine durchschnittliche Funktionalität von wenigstens 2 isocyanatreaktiven Gruppen auf.

Geeignete isocyanatreaktive Verbindungen (B) sind beispielsweise die üblichen aus der Polyurethanchemie bekannten mindestens difunktionellen Polyhydroxylverbindungen, wie z. B. Polyesterpolyole, Polyetherpolyole, Polycarbonatpolyole und/oder Polyacrylatpolyole, oder beliebige Abmischungen solcher Polyole.

Geeignete Polyesterpolyole (B) sind beispielsweise solche eines mittleren, aus Funktionalität und Hydroxylzahl berechenbaren Molekulargewichtes von 200 bis 3000, vorzugsweise von 250 bis 2500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Zur Herstellung dieser Polyesterpolyole geeignete mehrwertige Alkohole sind insbesondere solche des Molekulargewichtsbereichs 62 bis 400 wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Die zur Herstellung der Polyesterpolyole (B) verwendeten Säuren oder Säurederivate können aliphatischer, cycloaliphatischer und/oder heteroaromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellitsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole (B) können auch beliebige Gemische dieser beispielhaft genannten Ausgangsverbindungen eingesetzt werden.

Geeignete Polyesterpolyole (B) sind auch solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise □-Propiolacton, □-Butyrolacton, □- und □-Valerolacton, □-Caprolacton, 3,5,5- und 3,3,5-Trimethylcaprolacton oder beliebige Gemische solcher Lactone.

Die Herstellung dieser Lactonpolyester erfolgt im allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C.

Geeignete Polyetherpolyole (B) sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, beispielsweise solche des Molekulargewichtsbereichs 62 bis 400, wie sie oben bei der Herstellung von Polyesterpolyolen beschrieben werden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyacrylatpoylole (B) sind beispielsweise solche eines mittleren aus Funktionalität und Hydroxylzahl berechenbaren oder durch Gelpermeationschromatografie (GPC) bestimmbaren Molekulargewichtes von 800 bis 50.000, vorzugsweise von 1000 bis 20.000, mit einem Hydroxylgruppengehalt von 0,1 bis 12 Gew.-%, vorzugsweise 1 bis 10, wie sie sich in an sich bekannter Weise durch Copolymerisation Hydroxylgruppen aufweisender olefinisch ungesättigter Monomerer mit hydroxylgruppenfreien olefinischen Monomeren herstellen lassen.

Beispiele für geeignete Monomere zur Herstellung der Polyacrylatpolyole (B) sind Vinyl- bzw. Vinylidenmonomere wie z.B. Styrol, □-Methylstyrol, o- bzw. p-Chlorstyrol, o-, m- oder p-Methylstyrol, p-tert.-Butylstyrol, Acrylsäure, Acrylnitril, Methacrylnitril, Acryl- und Methacrylsäureester von Alkoholen mit bis zu 18 Kohlenstoffatomen, wie z. B. Methylacrylat, Ethylacrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert.-Butycyclohexylacrylat, Isobornylacrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacrylat, Hexylmethacrylat, 2-Ethylhexylmethacrylat, Isooctylmethacrylat, 3,3,5-Trimethylhexylmethacrylat, Stearylmethacrylat, Laurylmethacrylat, Cyclopentylmethacrylat, Cyclohexylmethacrylat, 4-tert.-Butycyclohexylmethacrylat, Norbornylmethacrylat oder Isobornylmethacrylat, Diester der Fumarsäure, Itaconsäure oder Maleinsäure mit 4 bis 8 Kohlenstoffatome aufweisenden Alkoholen, Acrylsäureamid, Methacrylsäureamid, Vinylester von Alkanmonocarbonsäuren mit 2 bis 5 Kohlenstoffatomen, wie z. B. Vinylacetat oder Vinylpropionat, Hydroxyalkylester der Acrylsäure oder Methacrylsäure mit 2 bis 5 Kohlenstoffatomen im Hydroxyalkylrest, wie z. B. 2-Hydroxyethyl-, 2-Hydroxypropyl-, 3-Hydroxypropyl-, 3-Hydroxybutyl-, 4-Hydroxybutyl-, Trimethylolpropanmono- oder Pentaerythritmonoacrylat oder -methacrylat, sowie beliebige Gemische solcher beispielhaft genannter Monomere.

Bevorzugte Hydroxylgruppen-haltige Verbindungen (B) sind Polyesterpolyole, Polycarbonatpolyole und/oder Polyacrylatpolyole der genannten Art. Besonders bevorzugte Hydroxylgruppen-haltige Verbindungen (B) sind Polyacrylatpolyole der genannten Art, die gegebenenfalls im Gemisch mit Polyesterpolyolen und/oder Polycarbonatpolyolen der genannten Art eingesetzt werden können. Ganz besonders bevorzugt werden als Hydroxylgruppen-haltige Verbindungen ausschließlich Polyacrylatpolyole der genannten Art eingesetzt.

Wie oben ausgeführt, können als weitere geeignete isocanatreaktive Verbindungen (B) aminofunktionelle Verbindungen eingesetzt werden.

Bevorzugte Amine sind organische, mindestens difunktionelle Polyamine vorzugsweise ausgewählt aus der Gruppe bestehend aus 1,2-Ethylendiamin, 1,2- und 1,3-Diaminopropan, 1,4-Diaminobutan, 1,6-Diaminohexan, Isophorondiamin, dem Isomerengemisch von 2,2,4- und 2,4,4-Trimethylhexamethylendiamin, 2-Methylpentamethylendiamin, Diethylentriamin, 4,4-Diaminodicyclohexylmethan, Hydrazinhydrat, Dimethylethylendiamin, mit Aminoendgruppen modifizierte Polyether und Verbindungen gemäß Formel (VI) eingesetzt.

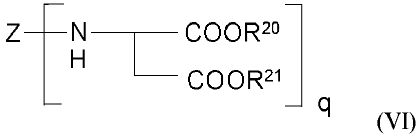

Hierbei steht
- Z: für einen q-wertigen, gegenüber Isocyanatgruppen inerten Rest, wie er durch Entfernen der primären Aminogruppen aus einem organischen Amin des Molekulargewichtsbereiches 60 bis 6000 mit n primären aliphatisch und/oder cycloaliphatisch gebundenen Aminogruppen erhalten wird, der gegebenenfalls ein oder mehrere Heteroatome und/oder weitere, gegenüber Isocyanatgruppen reaktive und/oder bei Temperaturen bis 100°C inerte funktionelle Gruppen enthält,
- R²⁰ und R²¹: für gleiche oder verschiedene organische Reste mit 1 bis 18 Kohlenstoffatomen und
- q: für eine ganze Zahl ≥ 1.

Gleichfalls sind Amine bevorzugt, die wenigstens eine Aminogruppe und wenigstens eine Hydroxylgruppe enthalten (Aminoalkohole). Solche Verbindungen sind vorzugsweise ausgewählt aus der Gruppe bestehend aus Diethanolamin, 3-Amino-1-methylaminopropan, 3-Amino-1-ethylaminopropan, 3-Amino-1-cyclohexyl-aminopropan, 3-Amino-1-methylaminobutan, Alkanolamine wie N-Aminoethyl-ethanolamin, Ethanolamin, 3-Aminopropanol und Neopentanolamin.

Selbstverständlich können auch Mischungen der oben beschriebenen Hydroxylgruppen- und Aminogruppen-tragenden Verbindungen als Komponente B verwendet werden verwendet werden.

### Komponente (C)

Die erfindungsgemäßen Beschichtungsmittel enthalten mindestens ein alkoxysilyl-funktionelles Siloxan (Ci) und/oder mindestens ein Hydroxylgruppen-haltiges Siloxan (Cii).

Siloxane sind dem Fachmann bekannt. Es handelt sich um von reinen Silanen (das heißt binären aus Si und H bestehenden Verbindungen) abgeleitete Komponenten (Derivate von reinen Silanen) der allgemeinen Formel R₁Si-[0-SiR₂]ₙ-0-SiR₃, wobei R Wasserstoffatome oder Alkylgruppen sein können. In Siloxanen sind die Siliziumatome also über genau ein Sauerstoffatom mit ihrem benachbarten Siliziumatom verknüpft, sie enthalten zumindest eine Si-O-Si Bindung. Ist mindestens eines der Wasserstoffatome durch einen organischen Rest wie beispielsweise eine Alkylgruppe ersetzt, werden diese auch als Organosiloxane bezeichnet. Oligomere oder polymere Organosiloxane (Siloxane mit R ≠H) besitzen lange Si-O- Hauptketten und werden wiederum als Silicone bezeichnet.

Enthält der zuvor beschriebene organische Rest des Organosiloxans zudem mindestens eine Hydroxylgruppe, ist in dem organischen Rest also mindestens ein Wasserstoffrest durch eine Hydroxylgruppe substituiert, wird dies im Rahmen der vorliegenden Erfindung als Hydroxylgruppen-haltiges Siloxan (Komponente Cii) bezeichnet.

Enthält der zuvor beschriebene organische Rest des Organosiloxans zudem mindestens eine Alkoxysilylgruppe, ist in dem organischen Rest also mindestens ein Wasserstoffrest durch eine Alkoxysilylgruppe substituiert, wodurch also zumindest anteilig ein Wasserstoff des vom reinen Siloxan abgeleiteten Derivats durch einen organischen Rest substituiert ist, der selber wiederum eine alkoxysilylfunktionelle Gruppe enthält, wird dies im Rahmen der vorliegenden Erfindung als alkoxysilylfunktionelles Siloxan (Komponente Ci) bezeichnet.

Bei einem alkoxysilylfunktionellen Rest handelt es sich um eine funktionelle Gruppe, die sich von einem Alkoxysilan ableitet, eine von einem reinen Silan abgeleitete Komponente enthaltend eine Gruppe Si-OR. Es ist also mindestens ein Wasserstoffatom eines reinen Silans durch eine Alkoxygruppe -OR, also eine über Sauerstoff mit dem Silizium verbundene Alkylgruppe, substituiert. Beispielsweise seien Mono-, Di-, oder Tri-methoxy- oder -ethoxy-silan genannt.

Demzufolge handelt es sich bei den erfindungsgemäß einzusetzenden alkoxysilylfunktionellen Siloxanen (Ci) um Derivate des Siloxans, in denen mindestens ein Wasserstoffatom durch einen organischen Rest substituiert wurde, in dem wiederum mindestens ein Wasserstoffrest durch eine Alkoxysilylgruppe ersetzt wurde. Die Alkoxysilylgruppe ist demzufolge immer als funktionelle Gruppe einer Alkylgruppe zu verstehen, die selber an dem Siloxangerüst angebunden ist. Die Alkoxysilylgruppe ist also immer über einen zweibindigen organischen Rest R, beispielsweise ein Alkylen, mit dem Si-O-Si Gerüst verbunden und bindet niemals direkt an das Siloxan Grundgerüst aus Si-O-Si Einheiten an.

Bevorzugte alkoxysilylfunktionelle Siloxane (Ci) können über die folgende allgemeine Formeln (II) beschrieben werden:

R⁴-SiR⁵₂-Aₓ-B_{y}-O-SiR⁶₂-R⁷ (II),

worin A eine Gruppe -[O-SiR⁸₂]- und B eine Gruppe -[O-SiR⁹R¹⁰]- ist,
R⁵, R⁶, R⁸ und R⁹ unabhängig voneinander lineare oder verzweigte Alkylgruppen mit 1 bis 4 Kohlenstoffatomen sind,
R⁴, R⁷ und R¹⁰ unabhängig voneinander eine Gruppe -L-R¹¹ sind, worin
L = eine lineare oder verzweigte 2-bindige Alkylgruppe und
R¹¹ = H oder -Si(R¹²)_{z}(OR¹³)_{3-z}mit R¹², R¹³ = eine lineare oder verzweigte Alkylgruppe mit 1 bis 4 Kohlenstoffatomen und z = 0, 1, oder 2, bevorzugt z = 0, ist,
mit der Vorgabe, das mindestens einer der Reste R⁴ oder R⁷ und/oder mindestens eine Gruppe B eine Gruppe R¹¹ = -Si(R¹²)_{z}(OR¹³)₃-, beinhaltet,
x unabhängig für eine ganze Zahl von 1 -20 steht, und
y unabhängig für eine ganze Zahl von 0-10 steht,
wobei bevorzugt x+y ≤ 20 ist.

Das Siloxan (Ci) enthält also jedenfalls mindestens eine Gruppe -Si(R¹²)_{z}(OR¹³)_{3-z}.

Ist y > 0, sind neben Bausteinen A auch Bausteine B in der Polysiloxankette enthalten. Ist dagegen y = 0, sind lediglich Bausteine A vorhanden. Bevorzugt sind lediglich Bausteine A vorhanden (y = 0). Nochmals bevorzugt ist y = 0 und x eine Zahl von 6 bis 14.

Die alkoxysilylfunktionellen Siloxane (Ci) können eine lineare oder verzweigte Form haben, je nachdem, welche Reste R⁴, R⁷ und/oder R¹⁰ eine Alkoxysilylgruppe enthalten. Sind Alkoxysilylgruppen in der Form des Rests R¹¹ = -Si(R¹²)_{z}(OR¹³)_{3-z} mit R¹², R¹³ = eine lineare oder verzweigte Alkylgruppe mit 1 - 4 Kohlenstoffatomen und z = 0, 1, oder 2, bevorzugt z = 0, nur terminal in den Resten R⁴ und R⁷ angeordnet, ist das alkoxysilylfunktionelle Siloxan linear. Sind hingegen auch Alkoxysilylgruppen in den Rest R¹⁰ enthalten, ist das Siloxan verzweigt. Bevorzugt ist das Siloxan linear.

Die Reste R⁴, R⁷ und R¹⁰ sind gleiche oder verschiedene Reste, wobei immer mindestens einer der Reste eine Gruppe -L-R¹¹ darstellt, in der R¹¹ eine Alkoxysilylgruppe entspricht. Ganz besonders bevorzugt weist mindestens eine dieser Reste R⁴, R⁷ und R¹⁰ eine Gruppe -L-R¹¹ auf, in der L eine Ethylengruppe und R¹¹ eine Trialkoxysilangruppe ist. Ganz besonders bevorzugt ist L eine Ethylengruppe und R¹¹ eine Trimethoxy- oder Triethoxysilangruppe. Nochmals ganz besonders bevorzugt ist y = 0 und es stellen beide terminalen Gruppen R⁴ und R⁷ eine Gruppe -L-R¹¹ dar, in der L eine Ethylengruppe und R¹¹ eine Trimethoxy- oder Triethoxysilangruppe ist. In einer weiteren ganz besonders bevorzugten Ausführungsform ist y > 0, entspricht R¹⁰ einer Gruppe -L-R¹¹, in der L eine Ethylengruppe und R¹¹ eine Trialkoxysilangruppe ist und R⁴ und R⁷ eine Gruppe -L-R¹¹ sind, in der R¹¹ einem Wasserstoffatom entspricht.

Besonders bevorzugt sind die Reste R⁵, R⁶, R⁸, R⁹, R¹² und R¹³ gleiche oder verschiedene Alkylreste, ganz besonders bevorzugt sind diese Reste R⁵, R⁶, R⁸, R⁹, R¹² und R¹³ lineare Alkylgruppen mit ein bis vier Kohlenstoffatomen, und nochmals ganz besonders bevorzugt sind die Reste R⁵, R⁶, R⁸, R⁹, R¹² und R¹³ Methyl- und/oder Ethylreste, insbesondere Methyl reste.

Komponente (Ci) enthält mindestens ein alkoxysilylfunktionelles Siloxan. Demnach können alkoxysilylfunktionelle Siloxane mit der Alkoxysilylfunktion in der Seitenkette neben solchen vorliegen, in der die Alkoxysilylfunktion(en) terminal an der Siloxankette vorliegen.

Besonders bevorzugte alkoxysilylfunktionellen Siloxane (Ci) sind im Handel über die Firma Shin Etsu erhältlich.

Bevorzugte Hydroxylgruppen-haltige Siloxane (Cii) können über die folgende allgemeine Formeln (III) beschrieben werden:

R¹⁴-SiR¹⁵₂-(O-SiR¹⁶₂)_{w}-O-SiR¹⁷₂-R¹⁸ (III),

worin
R¹⁵, R¹⁶ und R¹⁷ unabhängig voneinander lineare oder verzweigte Alkylgruppen mit 1 bis 4 Kohlenstoffatomen sind,
R¹⁴ und R¹⁸ unabhängig voneinander eine Gruppe -L'-R¹⁹ sind, worin
L' = eine lineare oder verzweigte 2-bindige Alkylgruppe und R¹⁹ = H oder OH ist, mit der Vorgabe, das mindestens einer der Reste R¹⁴ oder R¹⁸ einem Rest -L'-OH entspricht,
w für eine ganze Zahl von 1 -20 steht.

Besonders bevorzugt sind die Reste R¹⁵, R¹⁶ und R¹⁷ gleiche oder verschiedene Alkylreste, ganz besonders bevorzugt sind diese Reste R¹⁵, R¹⁶ und R¹⁷ lineare Alkylgruppen mit ein bis vier Kohlenstoffatomen, und nochmals ganz besonders bevorzugt sind die R¹⁵, R¹⁶ und R¹⁷ Methyl- und/oder Ethylreste, insbesondere Methylreste.

R¹⁴ und R¹⁸ entsprechen unabhängig voneinander einer Gruppe -L'-R¹⁹. Das heißt R¹⁴ und R¹⁸ können gleiche oder unterschiedliche Reste -L'-R¹⁹ sein. Handelt es ich um unterschiedliche Reste, so können die beiden Reste R¹⁹ und/oder die beiden Reste L' unterschiedlich sein, mit der Vorgabe, dass mindestens einer der Reste R¹⁴ oder R¹⁸ einem Rest -L'-OH entspricht, d.h. mindestens in einem der beiden Reste R¹⁹ eine OH-Gruppe ist.

Besonders bevorzugt entsprechen beide Reste R¹⁴ und R¹⁸ dem Rest -L'-OH. Ganz besonders bevorzugt entsprechen beide Reste R¹⁴ und R¹⁸ dem Rest-L'-OH und ist L' in beiden Resten R¹⁴ und R¹⁸ gleich.

Komponente (Cii) enthält mindestens ein Hydroxylgruppen-haltigens Siloxan. Demnach können Mischungen der oben beschriebenen Hydroxylgruppen-haltigen Siloxane als Komponente (Cii) vorliegen.

Besonders bevorzugte Hydroxylgruppen-haltige Siloxane (Cii) sind im Handel über die Firma Shin Etsu erhältlich.

Selbstverständlich können auch Siloxane der Komponente Ci und Cii in Mischung miteinander vorliegen.

Bevorzugt enthalten die erfindungsgemäßen Beschichtungsmittel von 0,001 bis 5 Gew.-%, bevorzugt von 0,005 bis 3 Gew.-% und besonders bevorzugt von 0,01 bis 2 Gew.-%, an Komponente C, wobei die Gew.-%-Angaben jeweils bezogen sind auf die Gesamtmenge aus Polyisocyanatkomponente (A), isocyanatreaktiver Komponente (B) und Siloxankomponente (C).

### Komponente (D)

Die erfindungsgemäßen Beschichtungsmittel enthalten weiterhin mindestens einen Katalysator (D) zur Vernetzung von Silangruppen. Hierbei handelt es sich um beliebige Verbindungen, die in der Lage sind, die Hydrolyse und Kondensation von Alkoxysilangruppen oder bevorzugt die thermisch induzierte Silankondensation zu beschleunigen.

Geeignete Katalysatoren (D) sind beispielsweise Säuren, wie z. B. organische Carbonsäuren, Schwefelsäure, p-Toluolsulfonsäure, Trifluormethansulfonsäure, Dodecylbenzolsulfonsäure, Essigsäure, Trifluoressigsäure, Phosphorsäuremonoester und Phosphorsäurediester, wie z. B. Dibutylphosphat, Phosphorsäure-2-ethylhexylester, Phosphorsäurephenylester und Phosphorsäure-bis(2-ethylhexyl)ester, sowie Phosphonsäurediester und Diphosphonsäurediester, wie sie z. B. in der WO 2007/033786 beschrieben sind.

Als Katalysatoren (D) ebenfalls geeignet sind auch Basen, wie z. B. die N-substituierten Amidine 1,5-Diazabicyclo[4.3.0]non-5-en (DBN) und 1,5-Diazabicyclo[5.4.0]undec-7-en (DBU), oder auch Metallsalze und Metallchelate, wie z. B. Tetraisopropyltitanat, Tetrabutyltitanat, Titan(IV)acetylacetonat, Aluminium-tri-sec-butylat, Aluminiumacetylacetonat, Aluminiumtriflat, Zinntriflat oder Zirkonethylacetoacetat, wie sie z. B. in WO 2006/042658 beschrieben sind.

Geeignete Katalysatoren (D) sind auch Phosphorsäure- und Phosphonsäureester der oben genannten Art, die in mit Aminen, vorzugsweise mit tertiären Aminen blockierter Form vorliegen. Besonders bevorzugte Katalysatoren dieses Typs sind solche, die im Temperaturbereich der Aushärtung von Automobildeck- und -klarlacken, beispielsweise im Bereich von 100 bis 150°C unter Abspaltung des Blockierungsamins die sauren Phosphorsäure- und Phosphonsäureester wieder freisetzen, die die eigentlich wirksame Katalysatoren darstellen. Geeignete aminblockierte Phosphorsäurekatalysatoren (D) sind beispielsweise in WO 2008/074489 und WO 2009/077180 beschrieben.

Ebenfalls geeignete Katalysatoren (D) sind organische Sulfonsäuren der oben genannten Art, die in blockierter Form, beispielsweise in amin-neutralisierter Form oder als Addukt an Epoxiden, wie in der DE 2 356 768 B1 beschrieben, eingesetzt werden und oberhalb von 100°C die katalytisch aktiven Sulfonsäuren wieder freisetzen.

Weitere zur Vernetzung von Silangruppen geeignete Katalysatoren (D) sind auch Tetraalkylammoniumcarboxylate, wie z. B. Tetramethylammoniumformiat, Tetramethylammonium - acetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammonium-propionat, Tetrapropylammoniumbutyrat, Tetrapropylammonium-benzoat, Tetrabutylammoniumformiat, Tetrabutylammoniumacetat, Tetrabutylammoniumpropionat, Tetrabutylammoniumbutyrat und/oder Tetrabutylammoniumbenzoat.

Zur Vernetzung von Silangruppen geeignete Katalysatoren (D) sind auch quaternäre Ammonium- und Phosphoniumpolyfluoride, wie sie z. B. aus der EP-A0 798 299, EP-A0 896 009 und EP-A0 962 455 als Trimerisierungskatalysatoren für Isocyanatgruppen bekannt sind.

Geeignete Katalysatoren (D) sind schließlich auch Zink-Amidin-Komplexe, die nach dem Verfahren der WO 2014/016019 durch Umsetzung eines oder mehrerer Zink(lI)biscarboxylate mit Amidinen hergestellt werden können.

Bevorzugte Katalysatoren (D) zur Vernetzung von Silangruppen sind saure Phosphorsäureester, Phosphonsäureester und Sulfonsäuren der genannten Art, die gegebenenfalls in mit Aminen blockierter Form vorliegen können, sowie Tetraalkylammoniumcarboxylate der genannten Art. Besonders bevorzugte Katalysatoren (D) sind mit Aminen blockierte Phosphorsäureester und Sulfonsäuren sowie die genannten Tetraalkylammoniumcarboxylate. Ganz besonders bevorzugte Katalysatoren (D) sind mit Aminen blockierte Phosphorsäurephenylester und Phosphorsäure-bis(2-ethylhexyl)ester, Tetraethylammoniumbenzoat und Tetrabutylammoniumbenzoat.

Neben den vorstehend beispielhaft genannten Katalysatoren (D) zur Silanvernetzung können die erfindungsgemäßen Beschichtungsmittel gegebenenfalls zusätzlich auch in der Isocyanatchemie übliche Urethanisierungskatalysatoren enthalten, die die Umsetzung der Isocyanantgruppen der Komponente (A) mit den Hydroxylgruppen der Komponente (B) beschleunigen, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Zirkonium(IV)-isopropylat, Zirkonium(IV)-n-butylat, Zirkonium(IV)-2-ethylhexanoat, Zirkonyloctanoat, Wismut(III)-2-ethylhexanoat, Wismut(III)-octoat oder Molybdänglykolat.

Die Katalysatoren (D) kommen in den erfindungsgemäßen Beschichtungsmitteln als Einzelsubstanz oder in Form beliebiger Gemische untereinander in Mengen von 0,005 Gew.-% bis zu 5 Gew.-%, vorzugsweise von 0,005 Gew.-% bis zu 2 Gew.-%, besonders bevorzugt von 0,005 Gew.-% bis zu 1 Gew.-%, berechnet als Summe aller eingesetzten Katalysatoren (D) und bezogen auf die Gesamtmenge aus Polyisocyanatkomponente (A), isocyanatreaktiver Komponente (B) und Siloxankomponente (C) zum Einsatz.

### Komponente (E)

Die erfindungsgemäßen Beschichtungsmittel können gegebenenfalls weitere Hilfs- und Zusatzstoffe (E) enthalten. Hierbei handelt es sich insbesondere um die dem Fachmann aus der Lacktechnologie bekannten Hilfs- und Zusatzstoffe, wie z. B. Lösungsmittel, UV-Stabilisatoren, Antioxidantien, Wasserfänger, Verlaufsmittel, Rheologieadditive, Slipadditive, Entschäumer, Füllstoffe und/oder Pigmente.

Zur Verringerung der Verarbeitungsviskosität können die erfindungsgemäßen Beschichtungsmittel beispielsweise mit üblichen organischen Lösungsmitteln (E₁) verdünnt werden. Hierfür geeignete Lösungsmittel sind beispielsweise die bereits vorstehend bei der Herstellung der Silangruppen enthaltenden Thioallophanate als gegebenenfalls mitzuverwendende Lösungsmittel beschriebenen Lacklösungsmittel, die sich gegenüber den reaktiven Gruppen der Beschichtungsmittelbestandteile chemisch inert verhalten und einen Wassergehalt von höchstens 1,0 Gew.-%, besonders bevorzugt höchstens 0,5 Gew.-% bezogen auf eingesetztes Lösungsmittel aufweisen.

Geeignete UV-Stabilisatoren (E₂) können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3 -tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Triazinderivaten, wie z.B. 2-[4-[(2-Hydroxy-3-dodecyloxypropyl)oxy]-2-hydroxyphenyl]-4,6-bis(2,4-dimethylphenyl)-1,3,5-triazin und 2-[4-[(2-Hydroxy-3-tridecyloxypropyl)oxy]-2-hydroxyphenyl]-4,6-bis(2,4-dimethylphenyl)-1,3,5-triazin; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten UV-Stabilisatoren können sowohl einzeln als auch in beliebigen Kombinationen untereinander zum Einsatz kommen.

Gegebenenfalls werden ein oder mehrere der beispielhaft genannten UV-Stabilisatoren (E₂) dem erfindungsgemäßen Beschichtungsmittel vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf die Gesamtmenge aus Polyisocyanatkomponente (A), isocyanatreaktiver Komponente (B), Komponente (E) und Siloxankomponente (C) zugesetzt.

Geeignete Antioxidantien (E₃) sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thio-diethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien (E₃) werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf die Gesamtmenge aus Polyisocyanatkomponente (A), isocyanatreaktiver Komponente (B) und Siloxankomponente (C) eingesetzt.

Um eine vorzeitige Vernetzung der Silangruppen in den erfindungsgemäßen Beschichtungsmitteln zu unterbinden, kann der Zusatz von Wasserfängern (E₄), beispielsweise Orthoameisenestern, wie z. B. Triethylorthoformiat, oder Vinylsilanen, wie z. B. Vinyltrimethoxysilan, vorteilhaft sein. Diese Wasserfänger kommen, falls überhaupt, in Mengen von 0,01 Gew.-% bis zu 5 Gew.-%, vorzugsweise von 0,01 Gew.-% bis zu 2 Gew.-%, bezogen auf die auf die Gesamtmenge aus Polyisocyanatkomponente (A), isocyanatreaktiver Komponente (B) und Siloxankomponente (C) zum Einsatz.

Zur Verbesserung der Substratbenetzung können die erfindungsgemäßen Beschichtungsmittel gegebenenfalls geeignete Verlaufsmittel (E₅), beispielsweise organisch modifizierte Siloxane, wie z. B. Polyethermodifizierte Siloxane, Polyacrylate und/oder Fluortenside, enthalten. Diese Verlaufsmittel kommen, falls überhaupt, in Mengen von 0,01 Gew.-% bis zu 3 Gew.-%, vorzugsweise von 0,01 Gew.-% bis zu 2 Gew.-%, besonders bevorzugt von 0,05 bis 1,5 Gew.-%, bezogen auf die auf die Gesamtmenge aus Polyisocyanatkomponente (A), isocyanatreaktiver Komponente (B) und Siloxankomponente (C) zum Einsatz.

Gegebenenfalls können die erfindungsgemäßen Beschichtungsmittel als weitere Vernetzerkomponenten (E₆) in untergeordneter Menge auch Melamine enthalten. Geeignete Melamine schließen monomeres Melamin, polymeres Melamin-Formaldehyd-Harz oder eine Kombination davon ein. Die monomeren Melamine schließen Melamine mit niedrigem Molekulargewicht ein, die im Durchschnitt drei oder mehrere Methylol-Gruppen, verethert mit einem einwertigen C1 bis C5-Alkohol, wie Methanol, n-Butanol oder Isobutanol, pro Triazinkern, enthalten und einen mittleren Kondensationsgrad bis zu etwa 2 und vorzugsweise im Bereich von etwa 1,1 bis etwa 1,8 aufweisen, und einen Anteil von einkerniger Spezies von nicht weniger als etwa 50 Gew.-% aufweisen. Im Gegensatz dazu haben die polymeren Melamine einen mittleren Kondensationsgrad von mehr als etwa 1,9. Einige solche geeignete monomere Melamine schließen alkylierte Melamine, wie methylierte, butylierte, isobutylierte Melamine und Gemische davon ein.

Viele von diesen geeigneten monomeren Melaminen werden kommerziell geliefert. Zum Beispiel liefern Cytec Industries Inc., West Patterson, New Jersey, Cymel 301 (Polymerisationsgrad von 1,5, 95 % Methyl und 5 % Methylol), Cymel 350 (Polymerisationsgrad von 1,6, 84 % Methyl und 16 % Methylol), 303, 325, 327, 370 und XW3106, welche alle monomere Melamine sind. Geeignete polymere Melamine schließen Melamin mit hohem Aminoanteil (teilweise alkyliert, -N, -H), bekannt als Resimene BMP5503 (Molekulargewicht 690, Polydispersität von 1,98, 56 % Butyl, 44 % Amino), welches von Solutia Inc., St. Louis, Missouri, bezogen wird, oder Cymel1158, bereitgestellt durch Cytec Industries Inc., West Patterson, New Jersey, ein. Cytec Industries Inc. liefern auch Cymel 1130 mit 80 Prozent Feststoffen (Polymerisationsgrad von 2,5), Cymel 1133 (48 % Methyl, 4 % Methylol und 48 % Butyl), beide von ihnen sind polymere Melamine.

Die in den erfindungsgemäßen Beschichtungsmitteln ebenfalls als weitere Hilfs- und Zusatzstoffe (E) gegebenenfalls enthaltenen Rheologieadditive, Slipadditive, Entschäumer, Füllstoffe und/oder Pigmente sind dem Fachmann bekannt und kommen falls überhaupt in der Lacktechnologie üblichen Mengen zum Einsatz. Eine ausführliche Übersicht über derartige geeignete Hilfs- und Zusatzstoffe findet sich beispielsweise in Bodo Müller, "Additive kompakt", Vincentz Network GmbH & Co KG (2009).

### Herstellung der Beschichtungsmittel und Verwendung

Handelt es sich bei dem Beschichtungsmittel um ein einkomponentiges (1 K-) Beschichtungsmittel, so werden Isocyanatgruppen-haltige Verbindungen (A) gewählt, deren freie Isocyanatgruppen mit Blockierungsmitteln blockiert sind. Zu verwendende bzw. bevorzugt zu verwendende Blockierungsmittel sind unter den Ausführungen zur Komponente (A) beschrieben.

Zur Herstellung der 1 K-Beschichtungsmittel werden die Komponenten (A), (B), (C), (D) und gegebenenfalls (E) in beliebiger Reihenfolge nacheinander oder gemeinsam vorzugsweise mit Hilfe geeigneter Mischaggregate innig vermischt bis eine homogene Lösung vorliegt. Dabei kommen die Polyisocyanatkomponente (A), die mindestens ein Silangruppen enthaltendes Thioallophanatpolyisocyanat enthält, die isocyanatreaktive Komponente (B) und, sofern vorhanden, das/die Hydroxylgruppen-haltige/n Siloxan/e (Cii) üblicherweise in solchen Mengen zum Einsatz, dass auf jede Isocyanatgruppe der Polyisocyanatkomponente (A) 0,5 bis 3,0, vorzugsweise 0,6 bis 2,0, besonders bevorzugt 0,8 bis 1,6 isocyanatreaktive Gruppen der Komponenten (B) und (Cii) entfallen.

Zur Herstellung von zweikomponentigen (2K-) Beschichtungsmitteln, welche erfindungsgemäß bevorzugt sind, werden getrennt 2 Beschichtungsmittelkomponenten hergestellt, wovon eine die Polyisocyanatkomponente (A) und eine zweite die isocyanatreaktive Komponente (B) enthält. Zudem enthält eine der beiden Beschichtungsmittelkomponenten die Siloxankomponente (C) oder beide Beschichtungsmittelkomponenten enthalten anteilig die Siloxankomponente (C), wobei bevorzugt eine Beschichtungsmittelkomponente allein Komponente (C) enthält. Besonders bevorzugt enthält die Beschichtungsmittelkomponente, die Komponente (B) enthält, auch Komponente (C).

Bezüglich des Mengenverhältnisses der Polyisocyanat-Komponente (A) zu den isocyanatreaktiven Verbindungen (B) und OH-Gruppenhaltigen Siloxanen (Cii) gilt dabei das oben zu den 1K-Beschichtungsmitteln Ausgeführte.

Die Katalysatorkomponente (D) sowie die gegebenenfalls mitzuverwendenden weiteren Hilfs- und Zusatzstoffe (E) können der die Polyisocyanatkomponente (A) und/oder der die isocyanatreaktive Komponente (B) enthaltenden Beschichtungsmittelkomponente zugesetzt werden.

Die Applikation der so erhaltenen 1K- und 2K-Beschichtungsmittel kann nach an sich bekannten Methoden erfolgen, beispielsweise durch Spritzen, Streichen, Tauchen, Fluten oder mit Hilfe von Walzen oder Rakeln in einer oder mehrerer Schichten.

Als Untergründe kommen dabei beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen, bekannten Grundierungen, Füllerlackierungen, Basislackierungen und/oder Klarlackierungen versehen werden können.

Bevorzugt finden die erfindungsgemäßen Beschichtungsmittel in Einsatzgebieten Verwendung, in denen an eine Beschichtung hohe Anforderungen an die optische Qualität und Beständigkeit gegenüber mechanischer Verkratzung gestellt werden, und in denen die Beschichtungen zudem eine hohe Anschmutzungsresistenz aufweisen und leicht zu reinigen sein sollten. Hierzu zählen insbesondere dekorative, schützende und/oder effektgebende, hoch kratzfeste Beschichtungen und Lackierungen im Bereich des Transportwesens, z.B. von Fahrzeugkarosserien, wie Schiffen und Flugzeugen, und von Kraftfahrzeugkarosserien, wie z. B. Motorrädern, Bussen, LKW, PKW oder Bahnfahrzeugen oder von Teilen hiervon. Ganz besonders eignen sich die erfindungsgemäßen Beschichtungsmittel zur Herstellung von Beschichtungen und Lackierungen, insbesondere von Klarlacken, in der Autoreparaturlackierung sowie in der Automobilserienlackierung (OEM).

Bevorzugt werden die erfindungsgemäßen Beschichtungsmittel dabei auch in der Klar- oder Decklackschicht von Mehrschichtaufbauten eingesetzt, insbesondere bei mehrstufigen Beschichtungsverfahren, bei denen auf ein gegebenenfalls vorbeschichtetes Substrat zunächst eine pigmentierte Basislackschicht und danach eine Schicht des erfindungsgemäßen Beschichtungsmittels aufgetragen werden.

Eine weitere Ausführungsform der vorliegenden Erfindung betrifft ein Verfahren zur Beschichtung von Oberflächen, enthaltend die Schritte
a) Aufbringen des Beschichtungsmittels auf ein Substrat; und
b) Aushärten des Beschichtungsmittels.

Vorzugsweise werden die erfindungsgemäßen Beschichtungsmittel nach Methoden der Spritzapplikation verarbeitet, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Das Vermischen der Einzelbestandteile der erfindungsgemäßen Beschichtungsmittel erfolgt in diesen Spritzapplikationsanwendungen vorzugsweise erst unmittelbar vor der Verarbeitung und kann vorteilhafterweise in sogenannten 2-Komponentenanlagen erfolgen.

Die Aushärtung der erfindungsgemäßen Beschichtungsmittel kann unmittelbar im Anschluss an die Applikation oder nach Einhalten einer bestimmten Ablüftzeit erfolgen. Die Ablüftzeit dient beispielsweise zum Verlauf und zur Entgasung der Lackschichten oder zum Verdunsten flüchtiger Bestandteile, wie z. B. Lösungsmittel. Die erforderliche Dauer der Ablüftzeit kann beispielsweise durch Anwendung erhöhter Temperaturen und/oder durch eine reduzierte Luftfeuchte gezielt gesteuert werden.

Die endgültige Aushärtung der applizierten erfindungsgemäßen Beschichtungsmittel erfolgt schließlich nach üblichen und bekannten Methoden, wie z. B. Erhitzen in einem Umluftofen, Bestrahlen mit IR-Lampen oder nahem Infrarot (NIR-Strahlung), vorzugsweise in einem Temperaturbereich von 30 bis 200°C, besonders bevorzugt 40 bis 190°C und ganz besonders bevorzugt 50 bis 180°C während einer Zeit von 1 min bis zu 12 h, besonders bevorzugt 2 min bis zu 6 h und ganz besonders bevorzugt 3 min bis 4 h.

Bevorzugt wird das Verfahren zur Beschichtung von Oberflächen in den weiter oben genannten Anwendungsgebieten eingesetzt.

Die auf diese Weise aus den erfindungsgemäßen Beschichtungsmitteln hergestellten Beschichtungen, die vorzugsweise Klarlacke darstellen, zeichnen sich durch eine hohe Kratzbeständigkeit und Lösemittelbeständigkeit, sowie gute Anschmutzungsresistenzen und (Selbst)reinigungseigenschaften aus.

In einer weiteren Ausführungsform betrifft die vorliegende Erfindung die Verwendung der oben beschriebenen erfindungsgemäßen Beschichtungsmittel zur Herstellung von Beschichtungen und Lackierungen.

Bevorzugt werden besagte Beschichtungen und Lackierungen zur Herstellung von Klarlacken verwendet.

Besonders bevorzugt ist eine Verwendung der erfindungsgemäßen Beschichtungsmittel zur Herstellung von Beschichtungen und Lackierungen in der Autoreparaturlackierung und in der Automobilserienlackierung.

Eine weitere Ausführungsform der vorliegenden Erfindung betrifft Substrate, die mit einem oder mehreren erfindungsgemäßen Beschichtungsmitteln beschichtet sind.

Das Substrat ist vorzugsweise ausgewählt aus der Gruppe bestehend aus Metall, Holz, Holzwerkstoffen, Glas, Stein, keramischen Materialien, mineralischen Baustoffen, harten und flexiblen Kunststoffen, Textilien, Leder und Papier.

Die folgenden Beispiele dienen dazu, die Erfindung zu illustrieren. Sie sind nicht dazu gedacht, den Schutzbereich der Ansprüche in irgendeiner Weise zu beschränken.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Bestimmung der Auslaufzeit erfolgte nach DIN EN ISO 2431:2012-03 mit Hilfe eines ISO Auslaufbechers mit 5 mm Düse.

Zur Herstellung von Automobilklarlacken wurden die im Folgenden beschriebenen Polyole jeweils mit einem handelsüblichen Verlaufsadditivs (BYK 331; BYK-Chemie GmbH, Wesel, DE, Verwendung als 50%ige Lösung in MPA), den Lichtstabilisatoren Tinuvin 292 und Tinuvin 384-2 (BASF SE, Ludwigshafen, DE, Verwendung 1% bzw. 1,5% Lieferform auf Bindemittel fest) sowie für alle Silan-enthaltenden Formulierung Vestanat EP-CAT 11 B (Tetraethylammoniumbenzoat, 50 %ige Lösung in Butanol, Evonik, Essen, Deutschland, Verwendung 1% bezogen auf Bindemittel fest) als Katalysator C) sowie je nach Formulierung die Additive KF-6000 bzw KR-410 (Shin-Etsu, Japan) durch intensives Rühren bei Raumtemperatur homogen vermischt. In diese Stammlackkomponente wurden die jeweiligen Polyisocyanate eingerührt und der Festkörper der fertigen Beschichtungsmittel mit 1-Methoxypropyl-2-acetat/Solventnaphta leicht (1:1) auf eine Auslaufzeit von ca. 28 s im ISO-Becher mit 5mm Düse eingestellt. Im Falle der Beispiele 6, 7, 12 und 13 wurden die Additive KR-6000 bzw KF-410 nicht in die Komponente B, sondern in das Polyisocyanat (Komponente A) eingerührt und zur Equilibrierung vor der Mischung mit der Komponente B über Nacht ruhen gelassen.

Tabelle 1 zeigt die Zusammensetzungen der einzelnen Formulierungen.

Zur Bestimmung der Pendeldämpfung nach König (nach DIN EN ISO 1522:2007), Prüfung der Lösungsmittelbeständigkeit, für den Kondenswassertest und den Markertest wurden die Beschichtungsmittel jeweils mittels Fließbecherpistole auf Glasplatten aufgebracht und nach 10 minütigem Ablüften bei Raumtemperatur innerhalb von 30 Minuten bei 140°C ausgehärtet. Alle Glasplatten wurden vor dem Testen für mindestens 48 h bei Raumtemperatur gelagert.

Zur Prüfung der Beschichtungen auf Lösungsmittelbeständigkeit (Anlösbarkeit) wurden jeweils kleine Mengen der Lösungsmittel Xylol (X), 1-Methoxypropyl-2-acetat (MPA), Ethylacetat (EA) und Aceton (A) in Reagenzgläser gegeben und mit einem Wattebausch an der Öffnung versehen, so dass eine mit Lösungsmittel gesättigte Atmosphäre innerhalb der Reagenzgläser entstand. Die Reagenzgläser wurden anschließend mit dem Wattebausch auf die Oberfläche des auf Glas applizierten Lackfilms gebracht und verblieben dort für 5 Min. Nach Abwischen des Lösungsmittels wurde der Film auf Zerstörung/Erweichung/Haftverlust geprüft und bewertet (0 = keine Veränderung, 5 = Film völlig aufgelöst). Angegeben sind die Bewertungen für die vier Lösungsmittel jeweils in der Reihenfolge X, MPA, EA und A in Form vier aufeinanderfolgender Ziffern.

Die Prüfung der Beständigkeit gegen Kondenswasser wurde nach DIN EN ISO 6270-2 CH:2018 für 240 Stunden durchgeführt.

Zur Bestimmung der Easy-to-Clean Eigenschaften mittels sogenanntem Markertest wurde mit einem handelsüblichen grünen edding 3000 permanent Marker (Firma Edding, Ahrensburg, Deutschland) ein breiter Strich auf die Beschichtung aufgetragen, welcher nach 10 s mit einem staubfreien Tuch soweit wie möglich abgewischt wurde. Die Intensität des Rückstands wurde visuell beurteilt ( 0 = kein erkennbarer Rückstand, 5 = kompletter Strich noch vorhanden). Außerdem wurde das Auftragsverhalten bewertet (+ = gut auftragbar, Z = Markierung zieht sich zusammen).

Die Messungen der Kontaktwinkel mit Wasser erfolgte sowohl auf Glas als auch am Aufbau (siehe unten). Die Messungen wurden an einem Gerät OCA20 der Firma Data Physics durchgeführt. Dazu wurden 10 Tropfen mit je ca 2 µL destilliertem Wasser auf die Beschichtungsoberfläche aufgesetzt und der entstanden Kontaktwinkel nach ca 3 s erfasst. Aus den 10 Messwerten wurde der Mittelwert berechnet. Zur Tropfenanalyse und Auswertung wurde die SCA-Software der Firma Data Physics verwendet.

Die Prüfung der Kratzbeständigkeit der Easy-to-Clean Eigenschaften erfolgte durch Kontaktwinkelmessungen vor und nach der Verkratzung am kompletten OEM-Mehrschichtaufbau auf Stahlblech.

Hierzu wurden die Beschichtungsmittel mittels einer Fließbecherpistole als Klarlacke auf KTL-Bleche appliziert (Trockenschichtdicke ca. 40µm Testbleche von Daimler, Deutschland), die zuvor mit einem handelsüblichen 1K-OEM-Hydrofüller (Trockenschichtdicke ca. 35µm) und einem schwarzen 1K-OEM-Hydrobasislack (Trockenschichtdicke ca. 15µm) beschichtet worden waren. Während der Hydrofüller durch 20 minütiges Einbrennen bei 165°C vollständig ausgehärtet war, wurde der Hydrobasislack lediglich für 10 Minuten bei 80°C vorgetrocknet. Nach dem Aufbringen der Klarlacke wurden die Basislackschicht und die Klarlackschicht gemeinsam innerhalb von 30 Minuten bei 140°C gehärtet. Alle Bleche wurden vor Prüfung mindestens 48 h bei Raumtemperatur gelagert.

Die Naßverkratzung wurde mit einer Amtec-Kistler-Laborwaschanlage nach DIN EN ISO 20566:2019 durchgeführt.

Tabelle 2 zeigt die Ergebnisse der anwendungstechnischen Prüfungen im Vergleich, jeweils ermittelt nach einer Lagerzeit von mindestens 48 h bei 23°C.

### Herstellung des 1K-OEM-Hydrobasislackes

| I.) Setaqua 6803 (Allnex Resins, Deutschland) Lieferform | | 36,94 |
|---|---|---|
| | Bayhydrol UA 2856 XP (Covestro Deutschland AG, Deutschland) Lieferform | 15,20 |
| | Luwipal 072 (BASF SE, Deutschland) Lieferform | 4,73 |
| | Dest. Wasser | 20,65 |
| | Dimethylethanolamin, 10%ig in dest. H₂O (für pH 8-8,5) | 5,59 |
| | 2-Ethyl-1-hexanol | 2,84 |
| | BYK 347 (Byk-Gardner GmbH, Deutschland) Lieferform | 0,18 |
| | BYK 345 (Byk-Gardner GmbH, Deutschland) Lieferform | 0,18 |
| | BYK 011 (Byk-Gardner GmbH, Deutschland) Lieferform | 1,49 |
| | Byketol AQ (Byk-Gardner GmbH, Deutschland) Lieferform | 2,80 |
| | n-Butanol | 0,14 |
| | Rheovis AS 1130, Lieferform | 1,18 |
| *5 min bei ca 5,2 m*/*s dispergieren* | | |

| II.) Pigment-Paste, schwarz, bestehend aus: | | 6,31 |
|---|---|---|
| | Setaqua B E 270 (Allnex Resins, Deutschland) Lieferform | 10,40 |
| | dest. Wasser | 41,60 |
| | Borchi Gen 0851 (Borchers GmbH, Deutschland) Lieferform | 32,00 |
| | Colour Black FW 200 (Evonik Degussa GmbH, Deutschland) | 16,00 |
| | *30 min. bei ca. 10,5 m*/*s dispergieren* | |
| *Teil II portionsweise unter Rühren zu Teil I hinzufügen* | | |

| **Gesamteinwaage** | | **100,00** |
|---|---|---|
| Festkörpergehalt bei Spritzviskosität | | Ca 21,8% |
| Auslaufzeit, DIN-Becher, 4mm | | Ca 30s |
| pH-Wert | | 8,0-8,5 |

### Herstellung des 1K-OEM-Hydrofüllers

| I.) Mill base | | |
|---|---|---|
| | Setaqua B E 270, 70% (Allnex Resins, Deutschland) Lieferform | 4,28 |
| | Dest. Wasser | 9,43 |
| | DMEA, 10% in Wasser | 0,61 |
| | BYK 011 (Byk-Gardner GmbH, Deutschland) Lieferform | 1,01 |
| | Surfynol 104 E (Evonik Resource Efficiency GmbH, Deutschland) Lieferform | 0,55 |
| | Sachtleben R-FD-I (Sachtleben Pigment GmbH, Deutschland) | 10,98 |
| | Bayferrox 303T (Lanxess Deutschland GmbH, Deutschland) | 0,12 |
| | Blanc fixe micro (Sachtleben Pigment GmbH, Deutschland) | 11,05 |
| | Microtalc IT extra (Mondo Minerals, Niederlande) | 2,70 |
| | Aerosil R 972 (Evonik Industries, Deutschland) | 0,38 |
| | | |

| II.) Setaqua BE 270, 70% Lieferform (Allnex Resins GmbH, Deutschland) | | 6,38 |
|---|---|---|
| | Maprenal MF 904, Lieferform (Prefere Melamines GmbH, Deutschland) | 1,92 |
| | Maprenal MF 915, Lieferform (Prefere Melamines GmbH, Deutschland) | 2,48 |
| | Butyl diglykol | 1,99 |
| | Tripropylenglykol | 1,99 |
| | BYK 346, Lieferform (Byk-Gardner GmbH, Deutschland) | 0,50 |
| | Bayhytherm 3246, 46% Lieferform (Covestro Deutschland AG, Deutschland) | 29,66 |
| | DMEA, 10% in Wasser | 1,08 |
| | Dest. Wasser | 12,89 |
| | | |

| **Gesamteinwaage** | | **100,00** |
|---|---|---|
| Festkörpergehalt bei Spritzviskosität | | Ca 48% |
| Auslaufzeit, ISO-Becher, 5mm | | Ca 40s |

### Verwendete Ausgangsverbindungen

### Desmodur ultra N 3390 BA/SN:

Aliphatisches Polyisocyanuratpolyisocyanat auf Basis von HDI (Covestro Deutschland AG, Leverkusen), 90 %ige Lösung in n-Butylacetat / Solventnaphtha 100 (1 : 1), NCO-Gehalt: 19,6 %, Viskosität bei 23°C: 550 mPas.

### Desmodur Z 4470 MPA/X:

Aliphatisches Polyisocyanuratpolyisocanat auf Basis von IPDI (Covestro Deutschland Ag, Leverkusen), 70 %ige Lösung in 1-Methylpropylacetat-2 / Xylol (1 : 1), NCO-Gehalt: 11,9 %, Viskosität bei 23°C: 1500 mPas.

### Silanfunktionelles Polyisocyanat P1:

672 g (4 mol) Hexamethylendiisocyanat (HDI) und 0,1 g Zink-(II)-2-ethyl-1-hexanoat wurden bei einer Temperatur von 80°C unter trockenem Stickstoff und Rühren vorgelegt. Über einen Zeitraum von ca. 30 min wurden 196 g (1,0 mol) Mercaptopropyltrimethoxysilan zugetropft, wobei die Temperatur der Mischung aufgrund der exotherm einsetzenden Reaktion bis auf 85°C anstieg. Das Reaktionsgemisch wurde weiter bei 85°C gerührt bis der NCO-Gehalt nach ca. 2 h auf 29,0 % abgesunken war. Der Katalysator wurde durch Zugabe von 0,1 g ortho-Phosphorsäure deaktiviert und das nicht umgesetzte monomere HDI bei einer Temperatur von 130°C und einem Druck von 0,1 mbar im Dünnschichtverdampfer abgetrennt. Man erhielt 486 g eines praktisch farblosen klaren Polyisocyanatgemisches, das folgende Kenndaten und Zusammensetzung aufwies:

| | |
|---|---|
| NCO-Gehalt: | 11,8 % |
| monomeres HDI: | 0,06 % |
| Viskosität (23°C): | 452 mPas |
| | |
| Thiourethan: | 0,0 mol-% |
| Thioallophanat: | 99,0 mol-% |
| Isocyanuratgruppen: | 1,0 mol-% |
| | |
| Si-Gehalt (berechnet): | 6,1 % |

### Silanfunktionelles Polyisocyanat P2:

42,0 Gew.-Teile eines handelsüblichen lösemittelfreien Polyisocyanuratpolyisocyanates auf Basis von HDI (Desmodur N 3300, Covestro Deutschland AG, Leverkusen) mit einem NCO-Gehalt von 21,8 % und einer Viskosität bei 23°C von 3000 mPas wurden gemeinsam mit 36,0 Gew.-Teilen n-Butylacetat bei 25°C vorgelegt und innerhalb von 120 min mit einem Gemisch aus 2,0 Gew.-Teilen N-[3-(Trimethoxysilyl)-propyl]butylamin und 20,0 Gew.-Teilen Bis[3-(trimethoxysiIyl)-propyl]amin versetzt. Nach einer Nachrührzeit von 30 min lag ein Silangruppen enthaltendes Polyisocyanat vor. Der NCO-Gehalt der Lösung betrug 6,3 %, die Viskosität der 64 %igen Lösung betrug bei 23°C 90 mPas.

### Setalux 91767 VX-60:

Sagging control agent-modifiziertes Polyacrylatpolyol (Allnex Germany GmbH, Bitterfeld-Wolfen, DE), 60 %ige Lösung in Solventnaphtha / Xylol (76 / 24), OH-Zahl (bezogen auf Lieferform): 90 mg KOH/g.

### Setalux D A 665 BA/X

Polyacrylatpolyol (Allnex Germany GmbH, Bitterfeld-Wolfen, DE), 65 %ige Lösung in Butylacetat / Xylol (75 : 25), OH-Zahl: 150 mg KOH/g (bezogen auf Lieferform), Viskosität bei 23°C: ca. 2400 mPas.

### KR-410:

lineares alkoxysilylfunktionelles Siloxan (Shin-Etsu, Japan), Lieferform.

### KF-6000:

lineares hydroxyfunktionelles Siloxan (Shin-Etsu, Japan), Lieferform.

**Tabelle 1: Klarlackformulierungen. Alle Angaben in g wenn nicht anders angegeben.**

| **Beispiel** | **1** (Vgl) | **2** (Vgl) | **3** (Vgl) | **4** | **5** | **6** | **7** | **8** (Vgl) | **9** (Vgl) | **10** (Vgl) | **11** (Vgl) | **12** (Vgl) | **13** (Vgl) |
|---|---|---|---|---|---|---|---|---|---|---|---|---|---|
| **Komponente B** | | | | | | | | | | | | | |
| Setalux D A 665 BA/X | 145,6 | 145,6 | 112,9 | 112,9 | 112,9 | 112,9 | 112,9 | 78,29 | 78,29 | 80,88 | 80,88 | 102,0 | 103,27 |
| Setalux 91767 VX-60 | 39,45 | 39,45 | 30,59 | 30,59 | 30,59 | 30,59 | 30,59 | 21,20 | 21,20 | 21,91 | 21,91 | 27,63 | 27,97 |
| Byk 331, 10%ig in BA | 0,18 | 0,18 | 0,18 | 0,18 | 0,18 | 0 18 | 0,18 | 0,18 | 0,18 | 0,18 | 0,18 | 0,18 | 0,18 |
| Tinuvin 292, 50% in MPA | 1,80 | 1,80 | 1,80 | 1,80 | 1,80 | 1,80 | 1,80 | 1,80 | 1,80 | 1,80 | 1,80 | 1,80 | 1,80 |
| Tinuvin 384-2, 50% in MPA | 2,70 | 2,70 | 2,70 | 2,70 | 2,70 | 2,70 | 2,70 | 2,70 | 2,70 | 2,70 | 2,70 | 2,70 | 2,70 |
| Methoxypropylacetat (MPA) | 19,05 | 19,05 | 19,05 | 19,05 | 19,05 | 19,05 | 19,05 | 19,05 | 19,05 | 19,05 | 19,05 | 19,05 | 19,05 |
| Solventnaphtha leicht | 19,05 | 19,05 | 19,05 | 19,05 | 19,05 | 19,05 | 19,05 | 19,05 | 19,05 | 19,05 | 19,05 | 19,05 | 19,05 |
| Vestanat EP-CAT 11 B | 3.60 | 3.60 | 3,60 | 3,60 | 3,60 | 3,60 | 3,60 | 3,60 | 3,60 | 3,60 | 3,60 | 3,60 | 3,60 |
| KR-410 | 1,50 | | | 1,50 | | | | 1,50 | | 1,50 | | | |
| KF-6000 | | 1,50 | | | 1,50 | | | | 1,50 | | 1.50 | | |

| **Komponente A** | | | | | | | | | | | | | |
|---|---|---|---|---|---|---|---|---|---|---|---|---|---|
| Desmodur ultra N 3390 BA/SN | 68,51 | 68,51 | | | | | | | | | | | |
| Polyisocyanat P1) | | | 88,23 | 88,23 | 88,23 | 88,23 | 88,23 | | | | | | |
| Polyisocyanat P2) | | | | | | | | 116,3 | 116,39 | 105.3 | 105.34 | 151,7 | 145,64 |
| Desmodur Z 4470 MPA/X | | | | | | | | | | 4,65 | 4,65 | | 4,12 |
| KR-410 | | | | | | 1,50 | | | | | | | |
| KF-6000 | | | | | | | 1,50 | | | | | 1,50 | 1,50 |
| Methoxypropylacetat (MPA) | 34,20 | 34,20 | 22,20 | 22,20 | 22,20 | 22,20 | 22,00 | | | 2,20 | 2,20 | 6,00 | 9,00 |
| Solventnaphtha leicht | 34.20 | 34.20 | 22.20 | 22,20 | 22,20 | 22.20 | 22.20 | | | 2.20 | 2,20 | 6,00 | 9,00 |

| **Beschreibung** | | | | | | | | | | | | | |
|---|---|---|---|---|---|---|---|---|---|---|---|---|---|
| Summe Gew.-Teile | **369,8** | **369,8** | **322,5** | **324,0** | **324,0** | **324,0** | **323,8** | **263,7** | **263,76** | **265,0** | **309,91** | **341,2** | **346,88** |
| NCO:OH | 1 : 1 | 1 : 1 | 1 : 1 | 1 : 1 | 1 : 1 | 1 : 1 | 1 : 1 | 1 : 1 | 1 : 1 | 1 : 1 | 1: 1 | 1 : 1 | 1 : 1 |
| Feststoffgehalt bei Appl. [%] | 49,2 | 49,2 | 56,6 | 56,1 | 56,1 | 56,3 | 56,4 | 53,1 | 53,1% | 52,2 | 46,1% | 54,1 | 53,2% |

**Tabelle 2: Prüfergebnisse.**

| **Beispiel** | **1** (Vgl) | **2** (Vgl) | **3** (Vgl) | **4** | **5** | **6** | **7** | **8** (Vgl) | **9** (Vgl) | **10** (Vgl) | **11** (Vgl) | **12** (Vgl) | **13** (Vgl) |
|---|---|---|---|---|---|---|---|---|---|---|---|---|---|
| **Prüfungen auf Glas** | | | | | | | | | | | | | |
| Schichtstärke | 40µm | 47µm | 40µm | 41µm | 37µm | 48µm | 40µm | 34µm | 36µm | 44µm | 43µm | 45µm | 41µm |
| Pendelhärte [s] | 24 | 19 | 182 | 186 | 175 | 178 | 124 | 203 | 198 | 200 | 196 | 191 | 191 |
| Nach Kondenswassertest | 162 | 166 | 131 | 140 | 122 | 103 | 131 | 133 | 132 | 137 | 128 | 135 | 135 |
| Anlösbarkeit | 0 0 0 0 | 1 1 2 3 | 0 0 0 0 | 0 0 0 1 | 1 1 1 1 | 0 0 0 0 | 0 0 0 1 | 0 0 0 0 | 0 0 0 0 | 0 0 0 0 | 0 0 0 0 | 0 0 0 0 | 0 0 0 0 |
| Markertest | 4 | 1 | 3 | 0 - 1 | 1 | 0 | 0 | 1 | 1 | 1 | 1-2 | 2 | 1 |
| Nach Kondenswassertest | 1 | 1 | 3 | 1 | 0 | 0 | 1 | 0 | 0 | 0 | 0 | 0 | 0 |
| Markertest Auftragsverhalten | - | Z | - | Z | Z | Z | Z | Z | Z | Z | Z | Z | Z |
| Nach Kondenswassertest | Z | Z | - | Z | Z | Z | Z | Z | Z | Z | Z | Z | Z |
| Kontaktwinkel (Wasser) | 103,9 | 88,7 | 81,9 | 103,3 | 100,2 | 101,0 | 101,1 | 100,5 | 100,9 | 100,9 | 101,4 | 90,7 | 101,7 |

| **Prüfungen am OEM-Komplettaufbau** | | | | | | | | | | | | | |
|---|---|---|---|---|---|---|---|---|---|---|---|---|---|
| Kontaktwinkel (Wasser) vor Verkratzung [°] | 102,9 | 104,1 | 82,4 | 102,2 | 103,6 | 97,7 | 101,9 | 99,9 | 101,5 | 102,5 | 102,1 | 89,9 | 100,9 |
| Kontaktwinkel (Wasser, nach Verkratzung) [°] | 101,5 | 101,7 | 79,3 | 101,0 | 102,1 | 104,2 | 98,0 | 90,3 | 88,6 | 101,2 | 92,4 | 80,8 | 93,1 |
| Differenz nach Verkratzung [°] | 1,4 | 2,4 | 3,1 | 1,2 | 1,5 | -6,5 | 3,9 | 9,6 | 12,9 | 1,3 | 9,7 | 9,1 | 7,8 |

Sämtliche Lacke härteten zu harten, glänzenden Beschichtungen aus.

Die erfindungsgemäßen Beispiele 4 bis 7 zeigen gegenüber den Vergleichsbeispielen ohne Silangruppen-enthaltendem Thioallophanat (Polyisocyanat P1), sowie dem Vergleichsbeispiel 3 ohne silanfunktionalem Additiv bessere Easy-to-Clean Eigenschaften beim Markertest, sowie gleichbleibend hohe Kontaktwinkel bei Auftragung auf Glas. Während Vergleichsbeispiele 1 und 3 durch schlechte Ergebnisse beim Markertest auffallen, zeigt Vergleichsbeispiel 2 schlechtere Werte bei der Anlösbarkeit und gleichzeitig einen niedrigeren Kontaktwinkel bei Auftragung auf Glas.

Das erfindungsgemäße Beispiel 4 mit alkoxysilsylfunktionalem Additiv zeigt gegenüber Vergleichsbeispiel 8 einen deutlich höheren Kontaktwinkel bei Auftragung des Klarlacks auf Glas. Der Kontaktwinkel, gemessen am Aufbau, bleibt bei den erfindungsgemäßen Beispielen 4 mit alkoxysilylfunktonalem Additiv und 5 mit hydroxysilylfunktionalem Additiv auch nach Naßverkratzung stabil, wohingegen der Kontaktwinkel der Vergleichsbeispiele 8 und 9 nach Naßverkratzung deutlich abfällt.

Ebenfalls ist es möglich, mit dem erfindungsgemäßen Polyisocyanat P1) in Kombination mit einem hydroxysilylfunktionalem Additiv eine Beschichtung herzustellen (Beispiel 5), die auch nach der Naßverkratzung einen hohen Kontaktwinkel von über 100° aufweist. Im Gegensatz dazu fiel der Kontaktwinkel nach Naßverkratzung bei den Vergleichsbeispielen 9 und 11 mit hydroxysilylfunktionalem Additiv deutlich ab.

Darüber hinaus ist es mit dem erfindungsgemäßem Polyisocyanat P1) ebenfalls möglich, das hydroxysilylfunktionale Additiv mit der Polyisocyanatkomponente zu mischen. Dabei entsteht eine Beschichtung (Beispiel 7) bei der der Kontaktwinkel nach Naßverkratzung nur geringfügig abnimmt, wohingegen der Kontaktwinkel nach Naßverkratzung bei den Vergleichsbeispielen 12 und 13 deutlich sinkt.

Zusammenfassend ist zu sagen, dass sich mit den erfindungsgemäßen Beschichtungsmitteln Beschichtungen erhalten lassen, die hinsichtlich ihrer Lösemittelbeständigkeit wenigstens vergleichbar gegenüber Beschichtungen des Standes der Technik sind und hinsichtlich ihrer Kratzbeständigkeit und Easy-to-Clean-Eigenschaften deutliche Vorteile gegenüber solchen Beschichtungen aufweisen.

## Patentansprüche

1. Nichtwässrige Beschichtungsmittel, enthaltend oder bestehend aus
A) mindestens eine/r Polyisocyanatkomponente (A), die mindestens ein Silangruppen enthaltendes Thioallophanat der allgemeinen Formel (I) 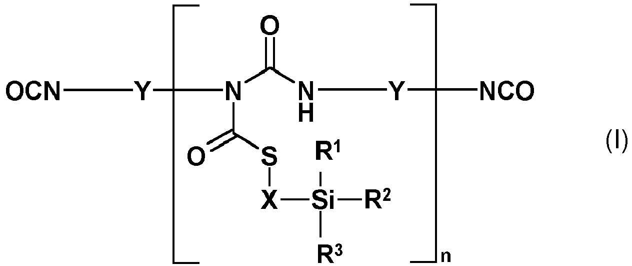 enthält, in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht,
Y einen linearen oder verzweigten, aliphatischen oder cycloaliphatischen, einen araliphatischen oder aromatischen Rest mit bis zu 18 Kohlenstoffatomen bedeutet und
n für eine ganze Zahl von 1 bis 20 steht,
B) mindestens eine/r isocyanatreaktive/n Verbindung (B), ausgenommen Verbindungen der Komponente Cii),
C)
i) mindestens ein/em alkoxysilylfunktionelles/en Siloxan (Ci) der Formel (II)
R⁴-Si⁵₂-Aₓ-B_{y}-O-SiR⁶₂-R⁷ (II),
worin A eine Gruppe -[O-SiR⁸₂]- und B eine Gruppe -[O-SiR⁹R¹⁰]- ist,
R⁵, R⁶, R⁸ und R⁹ unabhängig voneinander lineare oder verzweigte Alkylgruppen mit 1 bis 4 Kohlenstoffatomen sind,
R⁴, R⁷ und R¹⁰ unabhängig voneinander eine Gruppe -L-R¹¹ sind, worin
L = eine lineare oder verzweigte 2-bindige Alkylgruppe und
R¹¹ = H oder -Si(R¹²)_{z}(OR¹³)_{3-z}mit R¹², R¹³ = eine lineare oder verzweigte Alkylgruppe mit 1 bis 4 Kohlenstoffatomen und z = 0, 1, oder 2, bevorzugt z = 0, ist,
mit der Vorgabe, das mindestens einer der Reste R⁴ oder R⁷ und/oder mindestens eine Gruppe B eine Gruppe R¹¹ = -Si(R¹²)_{z}(OR¹³)_{3-z} beinhaltet,
x unabhängig für eine ganze Zahl von 1 -20 steht, und
y unabhängig für eine ganze Zahl von 0-10 steht,
wobei bevorzugt x+y ≤ 20 ist,
und/oder
ii) mindestens ein/em Hydroxylgruppen-haltiges/en Siloxan (Cii) der Formel (III)
R¹⁴-SiR¹⁵₂-(O-SiR¹⁶₂)_{w}-O-SiR¹⁷₂-R¹⁸ (III),
worin
R¹⁵, R¹⁶ und R¹⁷ unabhängig voneinander lineare oder verzweigte Alkylgruppen mit 1 bis 4 Kohlenstoffatomen sind,
R¹⁴ und R¹⁸ unabhängig voneinander eine Gruppe -L'-R¹⁹ sind, worin L' = eine lineare oder verzweigte 2-bindige Alkylgruppe und R¹⁹ = H oder OH ist, mit der Vorgabe, das mindestens einer der Reste R¹⁴ oder R¹⁸ einem Rest -L'-OH entspricht,
w für eine ganze Zahl von 1 -20 steht,
D) mindestens einen/einem Katalysator zur Vernetzung von Silangruppen (D) und
E) gegebenenfalls weitere/n Hilfs- und Zusatzstoffe/n (E).

2. Beschichtungsmittel gemäß Anspruch 1, **dadurch gekennzeichnet, dass** die Polyisocyanatkomponente (A) mindestens ein Silangruppen enthaltendes Thioallophanat der Formel (I) enthält, in welcher
R¹, R² und R³ jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht, und
X für einen Propylenrest (-CH₂-CH₂-CH₂-) steht,
Y und n die in Anspruch 1 genannte Bedeutung haben.

3. Beschichtungsmittel gemäß Anspruch 1 oder 2, **dadurch gekennzeichnet, dass** die Polyisocyanatkomponente (A) mindestens ein Silangruppen enthaltendes Thioallophanat der Formel (I) enthält, in welcher
R¹, R² und R³ für gleiche oder verschiedene Reste stehen und jeweils Methyl, Methoxy oder Ethoxy bedeuten, mit der Maßgabe, daß mindestens einer der Reste R¹, R² und R³ für einen Methoxy- oder Ethoxyrest steht,
X für einen Propylenrest (-CH₂-CH₂-CH₂-) steht, und
Y für einen linearen oder verzweigten, aliphatischen oder cycloaliphatischen Rest mit 5 bis 13 Kohlenstoffatomen steht, und
n die in Anspruch 1 genannte Bedeutung hat.

4. Beschichtungsmittel gemäß einem der Ansprüche 1 bis 3, **dadurch gekennzeichnet, dass** die Polyisocyanatkomponente (A) mindestens ein Silangruppen enthaltendes Thioallophanat der Formel (I) enthält, in welcher
Y einen aliphatischen und/oder cycloaliphatischen Rest bedeutet, wie er durch Entfernen der Isocyanatgruppen aus einem Diisocyanat, ausgewählt aus der Reihe 1,5-Diisocyanatopentan, 1,6-Diisocyanatohexan, 1-Isocyanato-3,3,5-trimethyl-5-isocyanatomethyl-cyclohexan, 2,4'- und/oder 4,4'-Diisocyanatodicyclohexylmethan erhalten wird.

5. Beschichtungsmittel gemäß einem der Ansprüche 1 bis 6, **dadurch gekennzeichnet, dass** die isocyanatreaktive Bindemittelkomponente (B) mindestens ein Polyesterpolyol, Polyetherpolyol, Polycarbonatpolyol, Polyacrylatpolyol Polyamin, Aminoalkohol und/oder Melaminharz enthält.

6. Beschichtungsmittel gemäß Anspruch 5, **dadurch gekennzeichnet, dass** die isocyanatreaktive Bindemittelkomponente (B) mindestens ein Polyesterpolyol, Polyetherpolyol, Polycarbonatpolyol, und/oder Polyacrylatpolyol enthält.

7. Beschichtungsmittel gemäß einem der Ansprüche 1 bis 6, **dadurch gekennzeichnet, dass** Komponente (C)
mindestens ein alkoxysilylfunktionelles Siloxan (Ci) der Formel (II) enthält, wobei R⁵, R⁶ und R⁸ unabhängig voneinander für Methyl und/oder Ethyl, bevorzugt für Methyl stehen, R⁴ und R⁷ unabhängig voneinander für eine Gruppe -L-R¹¹ stehen, worin L= eine lineare oder verzweigte 2-bindige Alkylgruppe, bevorzugt Ethylen, und R¹¹= -Si(R¹²)_{z}(OR¹³)_{3-z} mit R¹², R¹³= eine lineare oder verzweigte Alkylgruppe mit 1 bis 4 Kohlenstoffatomen und z = 0, 1, oder 2, bevorzugt z= 0, und y= 0,
und/oder
mindestens ein Hydroxylgruppen-haltiges Siloxan (Cii) der Formel (III) enthält, wobei R¹⁵, R¹⁶ und R¹⁷ unabhängig voneinander für Methyl und/oder Ethyl, bevorzugt für Methyl stehen, R¹⁴ und R¹⁸ unabhängig voneinander für eine Gruppe -L'-R¹⁹ stehen, worin L= eine lineare oder verzweigte 2-bindige Alkylgruppe und R¹⁹ = OH.

8. Beschichtungsmittel gemäß einem der Ansprüche 1 bis 7, **dadurch gekennzeichnet, dass** die Katalysatorkomponente (D) mindestens einen sauren Phosphorsäureester, Phosphonsäureester und/oder eine Sulfonsäure, die gegebenenfalls in mit Aminen blockierter Form vorliegen können, und/oder mindestens ein Tetraalkylammoniumcarboxylat enthält.

9. Beschichtungsmittel gemäß einem der Ansprüche 1 bis 8, **dadurch gekennzeichnet, dass** die Einzelkomponenten (A), (B) und gegebenenfalls (Cii) in solchen Mengenverhältnissen enthalten sind, dass auf jede Isocyanatgruppe der Polyisocyanatkomponente (A) 0,5 bis 3,0, vorzugsweise 0,6 bis 2,0, besonders bevorzugt 0,8 bis 1,6 isocyanatreaktive Gruppen der Komponenten (B) und (Cii) entfallen.

10. Beschichtungsmittel gemäß einem der Ansprüche 1 bis 8, **dadurch gekennzeichnet, dass** die Beschichtungsmittel von 0,001 bis 5 Gew.-%, bevorzugt von 0,005 bis 3 Gew.-% und besonders bevorzugt von 0,01 bis 2 Gew.-% an Komponente C enthalten, wobei die Gew.-%-Angaben jeweils bezogen sind auf die Gesamtmenge aus Polyisocyanatkomponente (A), isocyanatreaktiver Komponente (B) und Siloxankomponente (C).

11. Beschichtungsmittel gemäß einem der Ansprüche 1 bis 8, **dadurch gekennzeichnet, dass** das Beschichtungsmittel ein zweikomponentiges Beschichtungsmittel ist und
- die Beschichtungsmittelkomponenten, die die Polyisocyanatkomponte (A) enthält oder die Beschichtungsmittelkomponenten, die die isocyanatreaktive Komponente (B) enthält, die Siloxankomponente (C) enthält, oder
- die Beschichtungsmittelkomponenten, die die Polyisocyanatkomponte (A) enthält und die Beschichtungsmittelkomponenten, die die isocyanatreaktive Komponente (B) enthält, jeweils anteilig die Siloxankomponente (C) enthält.

12. Verwendung der Beschichtungsmittel gemäß einem der Anspruch 1 bis 11 zur Herstellung von Beschichtungen und Lackierungen, insbesondere Klarlacken, im Bereich des Transportwesens, insbesondere in der Autoreparaturlackierung und Automobilserienlackierung.

13. Verwendung gemäß Anspruch 12, **dadurch gekennzeichnet, dass** die Beschichtungsmittel in einem Temperaturbereich von 30 bis 200°C, besonders bevorzugt 40 bis 190°C und ganz besonders bevorzugt 50 bis 180°C während einer Zeit von 1 min bis zu 12 h, besonders bevorzugt 2 min bis zu 6 h und ganz besonders bevorzugt 3 min bis 4 h, ausgehärtet werden.

14. Mit Beschichtungsmitteln gemäß Anspruch 1 bis 11 beschichtete Substrate.
